(19) Europäisches Patentamt
European Patent Office
Office européen des brevets

(11) **EP 4 123 290 A1**

(12) **EUROPEAN PATENT APPLICATION**
published in accordance with Art. 153(4) EPC

(43) Date of publication:
**25.01.2023 Bulletin 2023/04**

(21) Application number: **21792521.3**

(22) Date of filing: **22.03.2021**

(51) International Patent Classification (IPC):
**G01N 21/27** (2006.01)    **G01N 21/65** (2006.01)

(52) Cooperative Patent Classification (CPC):
**G01N 21/27; G01N 21/65**

(86) International application number:
**PCT/JP2021/011564**

(87) International publication number:
**WO 2021/215166 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2020  JP 2020077572**

(71) Applicant: HORIBA, Ltd.
**Minami-ku
Kyoto-shi
Kyoto 601-8510 (JP)**

(72) Inventors:
• **OKUNO, Yoshito**
**Kyoto-shi, Kyoto 601-8510 (JP)**
• **NISHIMURA, Chiya**
**Kyoto-shi, Kyoto 601-8510 (JP)**
• **MORIMURA, Hiroyuki**
**Kyoto-shi, Kyoto 601-8510 (JP)**

(74) Representative: **Isarpatent**
**Patent- und Rechtsanwälte Barth
Charles Hassa Peckmann & Partner mbB
Friedrichstrasse 31
80801 München (DE)**

(54) **SPECTROSCOPIC ANALYSIS DEVICE, SPECTROSCOPIC ANALYSIS METHOD, AND COMPUTER PROGRAM**

(57)    A spectroscopic analysis device that can obtain a spectrum of light included in secondary light caused by primary light composed of multiple rays of light, a spectroscopic analysis method and a computer are provided.

The spectroscopic analysis device comprises an irradiation unit that irradiates a sample with primary light composed of a plurality of rays of light that are arranged apart from each other; a spectroscope that disperses secondary light composed of a plurality of rays of light and generated by irradiation of the sample with the primary light; an image pickup device that detects light dispersed by the spectroscope; and a processing unit that performs processing of generating spectra of a plurality of rays of light included in the secondary light based on a detection result obtained from the image pickup device. The spectroscope sequentially receives a plurality of types of secondary light that vary in combination of locations of a plurality of rays of light included in each of the secondary light according to a plurality of predetermined patterns, and disperses the plurality of types of secondary light received. The processing unit generates the spectra by performing processing according to the plurality of predetermined patterns based on a plurality of detection results obtained from the image pickup device in response to dispersion of the plurality of types of secondary light at the spectroscope.

FIG 1

**Description**

[Technical Field]

The present invention relates to a spectroscopic analysis device applying primary light to a substance and analyzing secondary light generated from the substance, a spectroscopic analysis method and a computer program.

[Background Art]

Applying primary light to a substance, measuring secondary light generated from the substance and analyzing the substance based on a spectrum of the secondary light have been performed. The analysis based on, for example, Raman scattered light, photoluminescence or fluorescence has been made. In order to obtain the spectrum of secondary light, a method using a spectroscope and an image pickup device may be employed. Examples of the image pickup device include a charge-coupled device (CCD) image sensor and a complementary metal-oxide-semiconductor (CMOS) image sensor, which are two-dimensional image sensors. The secondary light is dispersed by a spectroscope into spectra which travel in different directions depending on the wavelengths and are received at different positions on the image pickup device depending on the wavelengths. For example, the light receiving positions are linearly arranged in the x-axis direction on the image pickup device. The light receiving positions on the image pickup device and the wavelengths are correlated with each other, and thus from the detection results of the image pickup device, a spectrum of the secondary light can be obtained.

There is a method of applying point-like primary light to a sample, scanning the sample with the primary light in the x-axis direction and/or the y-axis direction, and obtaining a spectral distribution in which points on the sample and the spectra of the secondary light obtained from the respective points are associated with each other. Based on the spectral distribution, the distribution of a substance in a specific state can be analyzed. In the case where primary light applied to the sample is line of light extending along the y-axis direction instead of point-like light, light receiving positions for receiving light different in the wavelengths are arranged in the x-axis direction on the image pickup device while light receiving positions for receiving the secondary light generated from the respective points on the sample that are irradiated with the line of primary light are arranged in the y-axis direction on the image pickup device. The spectra of the secondary light generated from the multiple points on the sample that are irradiated with the line of primary light can thus be obtained by using the image pickup device. Scanning a sample with the line of primary light can reduce the scanning time in comparison with scanning the sample with point-like primary light. Patent Document 1 discloses a technique of performing spectroscopic analysis using an image pickup device.

[Prior Art Document]

[Patent Document]

[Patent Document 1] Japanese Patent No. 3377209

[Summary of Invention]

[Problems to be Solved by Application]

In order to reduce the scanning time, simultaneous application of multiple lines of light to a sample is conceivable. For example, application of primary light composed of one or more lines of light, each extending along one direction, that are arranged in a direction crossing the one direction is conceivable. However, light receiving positions for receiving the multiple rays of light included in secondary light caused by the multiple lines of light included in the primary light are superimposed onto each other on the image pick-up device, which makes it impossible to identify the multiple rays of light included in the secondary light. This allows for obtainment of the spectrum of the secondary light generated from the sample that is irradiated with the primary light composed of the multiple rays of light.

The present invention is made in view of such circumstances, and the object is to provide a spectroscopic analysis device that can obtain a spectrum of light included in secondary light caused by primary light composed of multiple rays of light, a spectroscopic analysis method and a computer program.

[Means for Solving Problems]

A spectroscopic analysis device, according to the present invention, is characterized by comprising: an irradiation unit that irradiates a sample with primary light composed of a plurality of rays of light that are arranged apart from each other; a spectroscope that disperses secondary light composed of a plurality of rays of light and generated by irradiation of the sample with the primary light; an image pickup device that detects light dispersed by the spectroscope; and a processing unit that performs processing of generating spectra of a plurality of rays of light included in the secondary light based on a detection result obtained from the image pickup device, wherein the spectroscope sequentially receives a plurality of types of secondary light that vary in combination of locations of a plurality of rays of light included in each of the secondary light according to a plurality of predetermined patterns, and disperses the plurality of types of secondary light received, and the processing unit generates the spectra by performing processing according to the plurality of predetermined patterns based on a plurality of detection results obtained from the image pickup device in response to dispersion of the plurality of types of secondary light at the spectroscope.

In one aspect of the present invention, the spectroscopic analysis device irradiates a sample with primary light composed of a plurality of rays of light that are arranged apart from each other, sequentially inputs to the spectroscope a plurality of types of secondary light that vary in combination of locations of plurality of rays of light according to a plurality of predetermined patterns, and detects the light dispersed at the spectroscope by the image pickup device. The spectroscopic analysis device can generate a spectrum of a plurality of rays of light included in the secondary light by the processing according to the predetermined patterns based on the plurality of times of detection results. By scanning a sample with primary light composed of a plurality of rays of light, a spectrum of secondary light can be obtained, which can reduce the scanning time in comparison with scanning of the sample with single primary light.

In the spectroscopic analysis device according to the present invention, it is characterized in that the irradiation unit sequentially generates a plurality of types of primary light different from each other by varying a combination of locations of a plurality of rays of light included in each of the primary light according to the plurality of predetermined patterns, and the spectroscope receives the plurality of types of secondary light generated by irradiation of the sample with the plurality of types of primary light.

In one aspect of the present invention, a plurality of types of primary light composed of a plurality of rays of light that are arranged according to the predetermined patterns are generated, and the plurality of types of primary light are sequentially applied to the sample. From the sample, a plurality of types of secondary light are sequentially generated. The plurality of types of secondary light sequentially enter the spectroscope.

In the spectroscopic analysis device according to the present invention, it is characterized in that the irradiation unit generates the plurality of types of primary light by using a plurality of masks that vary in combination of a plurality of light-transmitting positions according to the plurality of predetermined patterns.

In one aspect of the present invention, the masks are used in order to generate primary light composed of a plurality of rays of light that are arranged according to the predetermined patterns. The use of the masks facilitates generation of a plurality of types of primary light.

The spectroscopic analysis device according to the present invention, is characterized by further comprising a secondary light generation unit that sequentially generates the plurality of types of secondary light by blocking part of a plurality of rays of light generated by irradiation of the sample with the primary light such that the part of the plurality of rays of light does not enter the spectroscope and by changing, according to the plurality of predetermined patterns, a combination of the part of the plurality of rays of light that is blocked and part of the plurality of rays of light that enters the spectroscope without being blocked, wherein the spectroscope receives the plurality of types of secondary light generated by the secondary light generation unit.

In one aspect of the present invention, in a plurality of rays of light generated from the sample by being irradiated with primary light, part of the rays of light are blocked and another part of the rays of light enter the spectroscope. By varying combinations of rays of light that enter the spectroscope according to the plurality of predetermined patterns, a plurality of types of secondary light are sequentially generated.

In the spectroscopic analysis device according to the present invention, it is characterized in that the secondary light generation unit generates the plurality of types of secondary light by using a plurality of masks that vary, according to the plurality of predetermined patterns, in combination of a plurality of rays of light that pass through without being blocked in a plurality of rays of light generated by irradiation of the sample with the primary light.

In one aspect of the present invention, masks are used in order to block part of the rays of light in the plurality of rays of light generated from the sample. The use of the masks facilitates generation of a plurality of types of secondary light.

The spectroscopic analysis device according to the present invention, is characterized by further comprising: a scanning unit that scans the sample with the primary light; an image generation unit that generates a spectral distribution that associates parts on the sample on which said scanning is performed with spectra of light included in secondary light generated from the parts, and generates a distribution image of a substance in a specific state based on the spectral distribution, and a super-resolution unit that improves a resolution of the distribution image using a super-resolution technology.

In one aspect of the present invention, the spectroscopic analysis device generates a spectral distribution, generates a distribution image of a substance in a specific state based on the spectral distribution, and improves the resolution of the distribution image by the super-resolution technology. Even if roughly scanning a sample, the spectroscopic analysis device can generate a distribution image with a resolution equivalent to that obtained when fine scanning is performed. Rough scanning of the sample can reduce the scanning time.

In the spectroscopic analysis device according to the present invention, it is characterized in that, on a light receiving surface of the image pickup device, a plurality of light receiving positions corresponding to parts on the sample that are irradiated with the plurality of rays of light are arranged apart from each other in a direction corresponding to a direction in which a plurality of rays of light included in the primary light are arranged, and light receiving positions of the dispersed light are arranged depending on wavelengths at positions different from the plurality of light receiving positions and are arranged in a direction corresponding to a direction in which the plurality of rays of light are arranged.

In one aspect of the present invention, on the light receiving surface of the image pickup device, a plurality of light receiving positions corresponding to parts on the sample that are irradiated with the plurality of rays of light included in primary light are arranged, and light receiving positions for receiving dispersed light are arranged depending on the wavelengths at positions different from the plurality of light receiving positions for the primary light. The dispersed light is received and detected at the positions different for respective wavelengths on the light receiving surface, and a spectrum can be obtained based on the light receiving positions and the light intensities of the received light.

In the spectroscopic analysis device according to the present invention, it is characterized in that the processing unit generates the spectra according to an individual processing method for each of the plurality of rays of light included in the secondary light.

In one aspect of the present invention, the spectroscopic analysis device generates the spectrum according to the individual processing method for each of the plurality of rays of light included in secondary light generated from parts on the sample that are irradiated with a plurality of rays of light included in primary light. The light receiving positions for receiving the plurality of rays of light included in the secondary light are superimposed onto each other on the light receiving surface of the image pickup device, and the combinations of superimposition are different depending on the combination patterns of the plurality of rays of light and each type of rays of light. Thus, the spectrum of the rays of light included in the secondary light is calculated by the individual processing method.

In the spectroscopic analysis device according to the present invention, it is characterized in that the processing method includes a matrix operation.

In one aspect of the present invention, the processing method for generating a spectrum of the secondary light caused by each of the plurality of rays of light includes a matrix operation. The matrix operation enables high-speed calculation and high-speed generation of a spectrum.

In the spectroscopic analysis device according to the present invention, it is characterized in that the plurality of predetermined patterns are patterns of elements included in a plurality of rows or a plurality of columns of an S matrix obtained by converting an element +1 to 0 and converting an element -1 to 1 in elements of a Hadamard matrix of the fourth order or higher and removing a first row and a first column from the Hadamard matrix, and the matrix operation is an operation using the S matrix.

In one aspect of the present invention, the spectroscopic analysis device uses patterns obtained based on a Hadamard matrix and performs a matrix operation using an S matrix obtained from the Hadamard matrix. The patterns obtained from the Hadamard matrix are simple, and the matrix operation using the S matrix is easy, which facilitates execution of processing to generate a spectrum.

In the spectroscopic analysis device according to the present invention, it is characterized in that a plurality of rays of light included in the primary light are lines of light extending along a second direction crossing a first direction in which the plurality of rays of light are arranged, and on a light receiving surface of the image pickup device, a plurality of light receiving lines each including light receiving positions corresponding to parts on the sample that are irradiated with the lines of light arranged in a direction corresponding to the second direction are arranged apart from each other in a direction corresponding to the first direction.

In one aspect of the present invention, the spectroscopic analysis device employs line of light as a ray of light included in the primary light. Scanning of the sample with line of light can reduce the scanning time in comparison with scanning of the sample with point-like primary light.

In the spectroscopic analysis device according to the present invention, it is characterized in that the secondary light includes Raman scattered light, and the processing unit generates a spectrum of Raman scattered light.

In one aspect of the present invention, the secondary light includes Raman scattered light. The spectroscopic analysis device can generate a Raman spectral distribution in order to analyze a sample.

A spectroscopic analysis method, according to the present invention, is characterized by comprising: irradiating a sample with primary light composed of a plurality of rays of light that are arranged apart from each other; sequentially dispersing a plurality of types of secondary light that are generated by irradiation of the sample with the primary light and vary in combination of locations of a plurality of rays of light included in each of the secondary light according to a plurality of predetermined patterns; detecting dispersed light by an image pickup device; and generating a spectrum of a plurality of rays of light included in the secondary light by performing processing according to the plurality of predetermined patterns based on detection results of multiple times obtained from the image pickup device in response to dispersing the plurality of types of secondary light.

A computer program, according to the present invention, is characterized by causing a computer to execute processing of, based on detection results of multiple times obtained by irradiating a sample with primary light composed of a plurality of rays of light that are arranged apart from each other, by sequentially dispersing a plurality of types of secondary light that vary in combination of locations of a plurality of rays of light included in each of the secondary light according to a plurality of predetermined patterns and by detecting dispersed light on the image pickup device, generating spectra of a plurality of rays of light included in the secondary light by performing processing according to the plurality of predetermined patterns.

In one aspect of the present invention, a sample is irradiated with primary light composed of a plurality of rays of light that are arranged apart from each other, a plurality of types of secondary light that vary in combination of locations of plurality of rays of light according to a plurality of predetermined patterns
are sequentially input to the spectroscope, and the light dispersed at the spectroscope is detected by the image pickup device. Spectra of rays of light included in the secondary light can be generated by the processing according to the predetermined patterns based on the plurality of times of detection results. By scanning a sample with primary light composed of a plurality of rays of light, a spectrum of secondary light can be obtained, which can reduce the scanning time in comparison with scanning of the sample with single primary light.

[Effects of Invention]

In the present invention, by applying primary light composed of multiple rays of light to a sample, the spectroscopic analysis device can obtain a spectrum of secondary light generated from the sample. The spectroscopic analysis device can thus produce an advantageous effect such as reduction in time of scanning and analysis of a sample in a short period of time.

[Brief Description of Drawings]

FIG. 1 is a block diagram illustrating the configuration of a spectroscopic analysis device according to Embodiment 1.
FIG. 2 is a block diagram illustrating an example of the functional configuration of the interior of an analysis unit.
FIG. 3 is a schematic diagram illustrating the relationship between irradiation of a sample with primary light, reception of Raman scattered light on an image pickup device and a Raman spectrum.
FIG. 4 is a schematic diagram illustrating the sample that is irradiated with line of light and the light receiving surface of the image pickup device that receives Raman scattered light.
FIG. 5 is a schematic diagram illustrating a sample that is irradiated with multiple lines of light and the light receiving surface of the image pickup device that receives Raman scattered light.
FIG. 6 is a schematic plan view of a mask.
FIG. 7 is a schematic view illustrating a sample that is irradiated with primary light.
Fig. 8 is a schematic view illustrating the light receiving surface of the image pickup device that receives Raman scattered light in response to irradiation of a sample with pattern light.
FIG. 9 is a flowchart illustrating a processing procedure to be executed by the spectroscopic analysis device.
FIG. 10 is a block diagram illustrating the configuration of a spectroscopic analysis device according to Embodiment 2.
FIG. 11 is a schematic illustrating a fixed mask, a sample irradiated with primary light, a pattern mask and the light receiving surface of an image pickup device that receives Raman scattered light.

[Modes for Carrying out Invention]

Hereinafter, the present invention will be described in detail based on the drawings showing embodiments thereof.

Embodiment 1

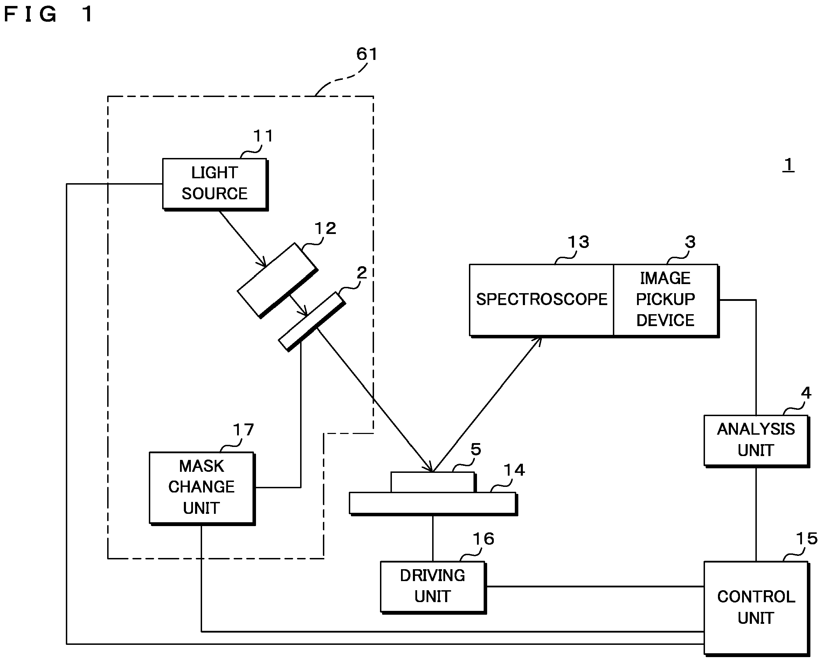

FIG. 1 is a block diagram illustrating the configuration of a spectroscopic analysis device 1 according to Embodiment 1. The spectroscopic analysis device 1 executes a spectroscopic analysis method. The spectroscopic analysis device 1 is a Raman scattered light measurement device that applies primary light to a sample 5 and measures Raman scattered light included in secondary light generated from the sample 5. In FIG. 1, light is represented by arrows. The spectroscopic analysis device 1 is provided with a sample holding unit 14 for holding the sample 5, a light source 11, a multi-spot light generation unit 12 and a mask 2. The sample holding unit 14 is, for example, a sample stage where the sample 5 is placed. The sample holding unit 14 may have a form other than the sample stage. The sample holding unit 14 is connected to a driving unit 16 for moving the sample 5 by traveling of the sample holding unit 14. The light source 11 emits monochromatic light. The light source 11 is a laser light source, for example. The multi-spot light generation unit 12 has a beam splitter and multiple mirrors and splits light more than one times to generate multi-spot light where a large number of spots are distributed in a plane.

The mask 2 is a photomask, and includes multiple pattern masks for each including light permeable portions and light blocking portions that are arranged according to a predetermined pattern. The multiple pattern masks are different in the patterns of locations of the light permeable portions and the light blocking portions. Multi-spot light enters any one of the pattern masks included in the mask 2. Part of light passes through the light permeable portions while part of light is blocked at the light blocking portions, whereby pattern light composed of multiple rays of light arranged apart from each other according to a predetermined pattern is generated. The pattern light is applied as primary light to the sample 5 held on the sample holding unit 14. The details of the pattern light and the mask 2 will be described later. The spectroscopic analysis device 1 is provided with a mask change unit 17 for changing the pattern mask which multi-spot light enters by moving the mask 2. The light source 11, the multi-spot light generation unit 12, the mask 2 and the mask change unit 17 constitutes an irradiation unit 61.

The spectroscopic analysis device 1 has a spectroscope 13 and an image pickup device 3. At a part on the sample 5 that is irradiated with primary light, Raman scattered light is generated as secondary light and enters the spectroscope 13. The spectroscope 13 disperses the incident Raman scattered light and emits the dispersed light. The light dispersed by the spectroscope 13 enters the image pickup device 3. The image pickup device 3 is, for example, a CCD image sensor or a CMOS image sensor. The image pickup device 3 has a light receiving surface, receives incident light thereon and detects the received light intensities for different positions within the light receiving surface. The spectroscopic analysis device 1 is provided with an optical system composed of a large number of optical components such as a mirror, a lens, a filter and the like in order to guide and collect light such as primary light and Raman scattered light. The optical system is desirably constructed so that primary light is focused on the surface of the sample holding unit 14 or the surface of the sample 5, and secondary light is focused on a light incident position of the spectroscope 13. In FIG. 1, the optical system is not illustrated.

The spectroscopic analysis device 1 is further provided with a control unit 15 and an analysis unit 4. The control unit 15 is formed of a computer including an arithmetic unit for performing arithmetic operation and a memory for storing data. The control unit 15 is connected to the light source 11, the analysis unit 4, the driving unit 16 and the mask change unit 17. The control unit 15 controls the operation of the respective components in the spectroscopic analysis device 1. The image pickup device 3 is connected to the analysis unit 4 and inputs data representing the light detection result to the analysis unit 4.

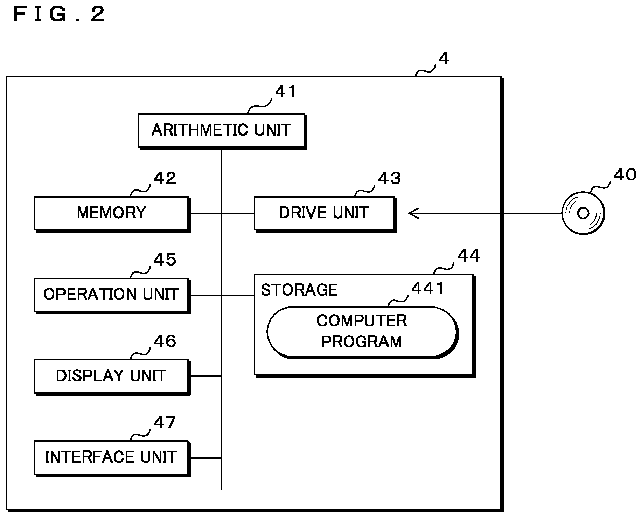

FIG. 2 is a block diagram illustrating an example of the functional configuration of the interior of the analysis unit 4. The analysis unit 4 is formed by using a computer such as a personal computer. The analysis unit 4 is provided with an arithmetic unit 41, a memory 42, a drive unit 43, a storage 44, an operation unit 45, a display unit 46 and an interface unit 47. The arithmetic unit 41 is formed by using a CPU (Central Processing Unit), a GPU (Graphics Processing Unit) or a multi-core CPU. The arithmetic unit 41 may further be formed by using a quantum computer. The memory 42 is a RAM (Random Access Memory), for example. The storage 44 is nonvolatile and is a hard disk, for example.

The drive unit 43 reads information from a recording medium 40 such as an optical disc or the like. The operation unit 45 accepts information such as text or the like in response to acceptance of an operation performed by the user. The operation unit 45 is, for example, a keyboard, a pointing device or a touch panel. The display unit 46 displays an image. The display unit 46 is, for example, a liquid crystal display or an Electroluminescent (EL) Display. The interface unit 47 is connected to the image pickup device 3 and the control unit 15. The analysis unit 4 accepts data input from the image pickup device 3 through the interface unit 47. The analysis unit 4 further accepts a control signal from the control unit 15 through the interface unit 47.

The arithmetic unit 41 causes the drive unit 43 to read a computer program 441 recorded in the recording unit 40 and stores the read computer program 441 in the storage 44. The arithmetic unit 41 executes necessary processing for the analysis unit 4 according to the computer program 441. It is noted that the analysis unit 4 is provided with a communication unit with which the computer program 441 may be downloaded from the outside of the analysis unit 4. Here, the analysis unit 4 is not necessarily provided with the drive unit 43.

The analysis unit 4 stores data representing the detection result obtained from the image pickup device 3 in the storage 44. The arithmetic unit 41 executes processing of analyzing Raman scattered light such as generation of a Raman spectrum based on the detection result obtained from the image pickup device 3. The display unit 46 displays the processing result. The control unit 15 and the analysis unit 4 may be integrally formed.

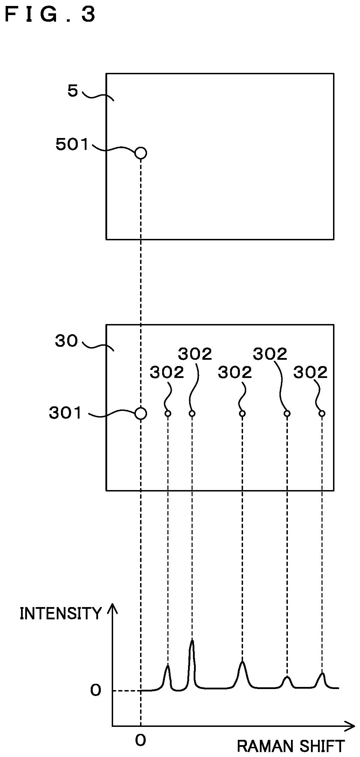

FIG. 3 is a schematic diagram illustrating the relationship between irradiation of a sample 5 with primary light, reception of Raman scattered light on an image pickup device 3 and a Raman spectrum. FIG. 3 illustrates the surface of the sample 5 that is irradiated with primary light, the light receiving surface 30 of the image pickup device 3 and the Raman spectrum. The horizontal axis of the Raman spectrum represents a Raman shift while the vertical axis thereof represents light intensity. Point-like irradiation light 501 is applied to the surface of the sample 5 as primary light. By the application of the irradiation light 501, Raman scattered light is generated from the sample 5, and enters the spectroscope 13. The spectroscope 13 disperses the Raman scattered light, and the dispersed light enters the light receiving surface 30. On the light receiving surface 30, light is received at a light receiving position 301 corresponding to the irradiation position of the irradiation light 501. The Raman scattered light is light having wavelengths different from the wavelength of the primary light. The spectroscope 13 emits the dispersed light in different directions depending on the wavelengths. The dispersed light thus enters different positions depending on the wavelengths on the light receiving surface 30 of the image pickup device 3 and is received. In other words, the Raman scattered light is received at positions different from the light receiving position 301 on the light receiving surface 30. In FIG. 3, a light receiving position of the Raman scattered light is denoted by a reference code 302. Normally, multiple rays of light different in the wavelengths are mixed in Raman scattered light, so that multiple light receiving positions 302 are generated.

The image pickup device 3 detects the intensities of received light at respective positions within the light receiving surface 30 and inputs data representing the detection result to the analysis unit 4. The data representing the detection result is data obtained by associating respective positions within the light receiving surface 30 and the intensities of light received at the respective positions. The analysis unit 4 specifies the light receiving positions 302 and the received light intensities at the light receiving positions 302 from the detection result and generates a Raman spectrum based on the light receiving positions 302 and the received light intensities. As illustrated in FIG. 3, the light receiving positions 302 correspond to the peaks of the Raman shift included in the Raman spectrum and the received light intensities correspond to the peaks of the intensities included in the Raman spectrum. Hence, the analysis unit 4 generates a Raman spectrum associated with the part on the sample 5 that is irradiated with the irradiation light 501 based on the detection result obtained from the image pickup device 3.

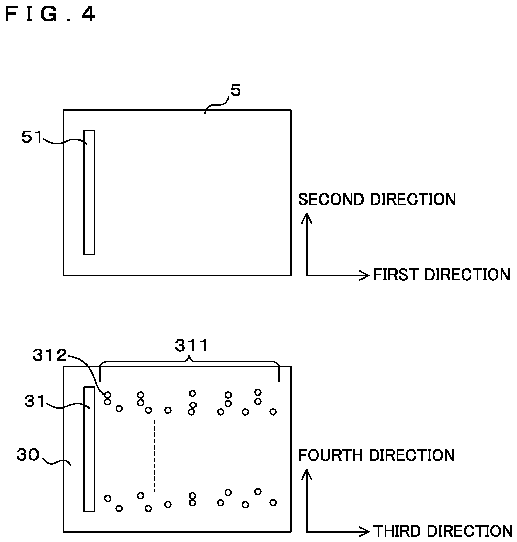

FIG. 4 is a schematic diagram illustrating the sample 5 that is irradiated with line of light and the light receiving surface 30 of the image pickup device 3 that receives Raman scattered light. Here, primary light is assumed as line of light 51 linearly distributed on the surface of the sample 5. A first direction and a second direction are assumed that cross each other along the surface of the sample 5. The line of light 51 is assumed as light distributed along the second direction on the surface of the sample 5. A third direction and a fourth direction are assumed that cross each other along the light receiving surface 30 of the image pickup device 3. The third direction is assumed as a direction corresponding to the first direction while the fourth direction is assumed as a direction corresponding to the second direction. A light receiving line 31 corresponding to the irradiation position of the line of light 51 is generated on the light receiving surface 30. The light receiving line 31 extends along the fourth direction. The spectroscopic analysis device 1 is configured such that multiple light receiving positions for receiving Raman scattered light generated at a point on the sample 5 that is irradiated with light are arranged along the third direction.

Raman scattered light is generated at multiple parts on the sample 5 that are irradiated with the line of light 51, and the image pickup device 3 receives the Raman scattered light at multiple light receiving positions 312 on the light receiving surface 30. Though the only one light receiving position 312 is denoted by a reference code in FIG. 4, many light receiving positions 312 are present within the light receiving surface 30. Multiple light receiving positions 312 for receiving Raman scattered light generated from a point of the part on the sample 5 that is irradiated with the line of light 51 are arranged along the third direction. Multiple light receiving positions 312 for receiving Raman scattered light are generated for respective points in the part on the sample 5 that is irradiated with the line of light 51. Thus, more than one groups of light receiving positions 312, each group including light receiving positions 312 arranged along the third direction, are arranged along the fourth direction. In other words, the multiple light receiving positions 312 are distributed in a plane. The position of the light receiving positions 312 in the third direction corresponds to a Raman shift while the position of the light receiving positions 312 in the fourth direction corresponds to the position where Raman scattered light is generated in the part on the sample 5 that is irradiated with the line of light 51. An area where multiple light receiving positions 312 are distributed in a plane is referred to as a light receiving area 311.

The image pickup device 3 detects the received light intensities at the respective positions on the light receiving surface 30 and inputs the data representing the detection results to the analysis unit 4. The analysis unit 4 generates, based on the detection results, a Raman spectrum for each of the multiple parts on the sample 5 that are irradiated with the line of light 51. In other words, the analysis unit 4 generates multiple Raman spectra associated with the multiple parts on the sample 5 that are irradiated with line of light 51. The analysis unit 4 can further generate a linear Raman spectrum distribution by associating Raman spectra with the multiple parts on the sample 5 that are irradiated with line of light 51.

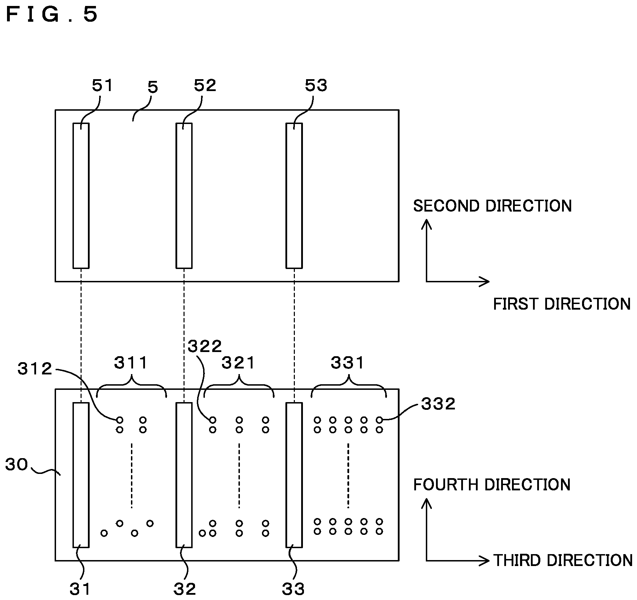

FIG. 5 is a schematic diagram illustrating a sample 5 that is irradiated with multiple lines of light and the light receiving surface 30 of the image pickup device 3 that receives Raman scattered light. Here, primary light is assumed as multiple lines of light that are arranged apart from each other along the second direction. FIG. 5 shows an example in which three lines of light 51, 52 and 53 are applied to the sample 5. Multiple rays of Raman scattered light are generated by the application of the multiple rays of the line of light 51, 52 and 53, and the multiple rays of Raman scattered light enter the spectroscope 13. The spectroscope 13 disperses each of the multiple rays of Raman scattered light, and the dispersed light enters the light receiving surface 30. Multiple light receiving lines 31, 32 and 33 corresponding to the irradiation positions of the multiple lines of light 51, 52 and 53 are generated on the light receiving surface 30. The light receiving lines 31, 32 and 33 are assumed to be arranged from the left in this order in the drawing. Furthermore, light receiving positions for Raman scattered light generated from the part on the sample 5 that is irradiated with each line of light are assumed to be located on the right of each of the light receiving lines in the drawing.

Between the light receiving line 31 and the light receiving line 32, a light receiving area 311 is present where multiple light receiving positions 312 for receiving Raman scattered light generated from the part on the sample 5 that is irradiated with the line of light 51 are distributed in a plane. Based on the multiple light receiving positions 312 and the intensities of light received at the respective light receiving positions 312, Raman spectra associated with multiple parts on the sample 5 that are irradiated with the line of light 51 can be generated. Between the light receiving line 32 and the light receiving line 33, a light receiving area 321 is present where multiple light receiving positions 322 are distributed in a plane. Though the only one light receiving position 322 is denoted by a reference code in FIG. 5, many light receiving positions 322 are present within the light receiving area 321. At the light receiving positions 322, Raman scattered light generated from the part on the sample 5 that is irradiated with the line of light 51 and Raman scattered light generated from the part on the sample 5 that is irradiated with the line of light 52 are received. At the right of the light receiving line 33, a light receiving area 331 is present where multiple light receiving positions 332 are distributed in a plane. At the multiple light receiving positions 332, Raman scattered light generated from the parts on the sample 5 that are irradiated with the line of light 51, 52 and 53 is received.

In this manner, the detection result obtained from the image pickup device 3 corresponds to superimposed detection results caused by multiple lines of light. In Embodiment 1, by employing pattern light as primary light, Raman spectra that are associated with the respective parts of the sample 5 can be generated from the superimposed detection results caused by the multiple lines of light.

In Embodiment 1, pattern light according to a predetermined pattern obtained based on a Hadamard matrix is employed as primary light. The Hadamard matrix is a square matrix, whose elements are either +1 or -1 and whose arbitrary two row vectors are mutually orthogonal. Moreover, the Hadamard matrix is a Hermitian matrix and a unitary matrix. Hadamard matrices of the first order, the second order, the fourth order and the eighth order are assumed as $H_1$, $H_2$, $H_4$ and $H_8$, respectively. Examples of $H_1$, $H_2$, $H_4$ and $H_8$ are represented by the following formulas (1) to (4), respectively.

$$H_1 = [1] \dots (1)$$

Formula 1

$$H_2 = \begin{bmatrix} 1 & 1 \\ 1 & -1 \end{bmatrix} \quad \cdots (2)$$

Formula 2

$$H_4 = \begin{bmatrix} 1 & 1 & 1 & 1 \\ 1 & -1 & 1 & -1 \\ 1 & 1 & -1 & -1 \\ 1 & -1 & -1 & 1 \end{bmatrix} \quad \cdots (3)$$

Formula 3

$$H_8 = \begin{bmatrix} 1 & 1 & 1 & 1 & 1 & 1 & 1 & 1 \\ 1 & -1 & 1 & -1 & 1 & -1 & 1 & -1 \\ 1 & 1 & -1 & -1 & 1 & 1 & -1 & -1 \\ 1 & -1 & -1 & 1 & 1 & -1 & -1 & 1 \\ 1 & 1 & 1 & 1 & -1 & -1 & -1 & -1 \\ 1 & -1 & 1 & -1 & -1 & 1 & -1 & 1 \\ 1 & 1 & -1 & -1 & -1 & -1 & 1 & 1 \\ 1 & -1 & -1 & 1 & -1 & 1 & 1 & -1 \end{bmatrix} \quad \cdots (4)$$

From a Hadamard matrix of the n-th order, the elements in the first column and the first row are removed. In all the other rows and columns, the element +1 is converted to 0 and the element -1 is converted to 1, to thereby create an S matrix of order n-1. S matrices of the first order, the third order and the seventh order are assumed as $S_1$, $S_3$ and $S_7$, respectively. Examples of $S_1$, $S_3$ and $S_7$ are represented by the following formulas (4) to (6).

$$S_1 = [1] \cdots (4)$$

Formula 4

$$S_3 = \begin{bmatrix} 1 & 0 & 1 \\ 0 & 1 & 1 \\ 1 & 1 & 0 \end{bmatrix} \quad \cdots (5)$$

Formula 5

$$S_7 = \begin{bmatrix} 1 & 0 & 1 & 0 & 1 & 0 & 1 \\ 0 & 1 & 1 & 0 & 0 & 1 & 1 \\ 1 & 1 & 0 & 0 & 1 & 1 & 0 \\ 0 & 0 & 0 & 1 & 1 & 1 & 1 \\ 1 & 0 & 1 & 1 & 0 & 1 & 0 \\ 0 & 1 & 1 & 1 & 1 & 0 & 0 \\ 1 & 1 & 0 & 1 & 0 & 0 & 1 \end{bmatrix} \quad \cdots (6)$$

The patterns used in Embodiment 1 are patterns of the elements included in the rows or the columns of the S matrix. The spectroscopic analysis device 1 employs, as multiple types of primary light, multiple types of pattern light according to multiple predetermined patterns obtained from the S matrix. The spectroscopic analysis device 1 employs a mask 2 for generating pattern light.

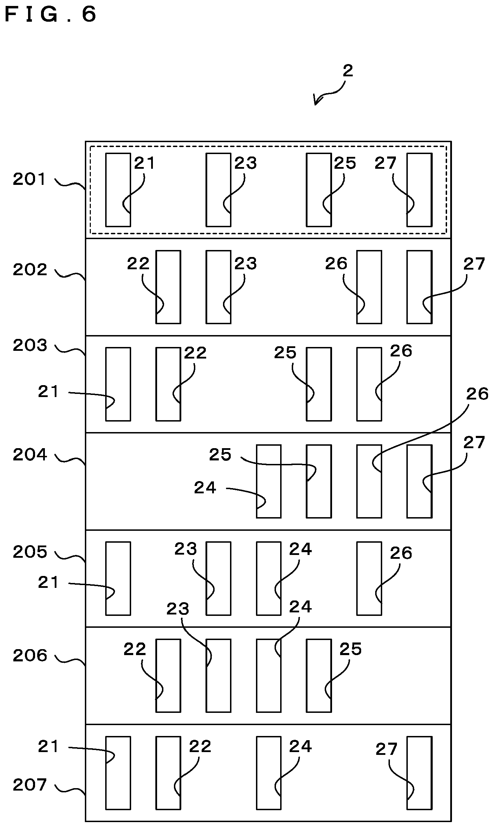

FIG. 6 is a schematic plan view of the mask 2. The mask 2 is made of a light blocking material in a shape of a planar plate. The mask 2 is composed of multiple pattern masks 201, 202, ..., 207. Each of the pattern masks 201, 202, ..., 207 is formed with any four of multiple permeable holes 21, 22, ..., 27 that are lined up apart from each other on the flat plate. The pattern masks 201, 202, ..., 207 may be separated from each other.

For the pattern mask 201, according to the pattern of the elements included in the first row or the first column of the matrix $S_7$, multiple permeable holes are formed. A permeable hole is formed in response to the element being 1 in the matrix $S_7$, while a light blocking portion is located instead of a permeable hole in response to the element being 0 in the matrix $S_7$. The elements included in the first row or the first column of the matrix $S_7$ are arranged in the order of 1010101. According to this order, on the pattern mask 201, the permeable hole 21 is formed, the permeable hole 22 is not formed, the permeable hole 23 is formed, the permeable hole 24 is not formed, the permeable hole 25 is formed, the permeable hole 26 is not formed and the permeable hole 27 is formed.

Likewise, for each of the pattern masks 202, 203, ..., 207 as well, multiple permeable holes are formed according to a pattern of the elements included in a predetermined row or a column of the matrix $S_7$. For the pattern mask 202, for example, multiple permeable holes are formed according to the pattern of the elements included in the second row or the second column of the matrix $S_7$. The elements included in the second row or the second column of the matrix $S_7$

are arranged in the order of 0110011. According to this order, the pattern mask 202 is formed with the permeable holes 22, 23, 26 and 27 and is not formed with the permeable hole 21, 24 and 25. For the pattern mask 207, for example, multiple permeable holes are formed according to a pattern of the elements included in the seventh row or the seventh column of the matrix $S_7$. The elements included in the seventh row or the seventh column of the matrix $S_7$ are arranged in the order of 1101001. According to this order, the pattern mask 207 is formed with the permeable holes 21, 22, 24 and 27 and is not formed with the permeable holes 23, 25 and 26.

The spectroscopic analysis device 1 inputs multi-spot light generated by the multi-spot light generation unit 12 to the pattern mask 201. In FIG. 6, the range of multi-spot light that enters the pattern mask 201 is represented by broken lines. Part of the multi-spot light passes through the light permeable holes 21, 23, 25 and 27 formed on the pattern mask 201 and is applied to the sample 5 as primary light. Another part of the multi-spot light is blocked by the pattern mask 201. The image pickup device 3 detects Raman scattered light while the primary light passing through the pattern mask 201 is applied to the sample 5. The mask change unit 17 then changes the pattern mask where multi-spot light enters to the pattern mask 202 by moving the mask 2. Second irradiation of the sample 5 with the primary light passing through the pattern mask 202 is performed, and second detection of Raman scattered light is performed by the image pickup device 3. Change of the pattern masks, irradiation of the sample 5 with primary light and detection of Raman scattered light are repeated until the sample 5 is irradiated with primary light seven times and Raman scattered light is detected seven times.

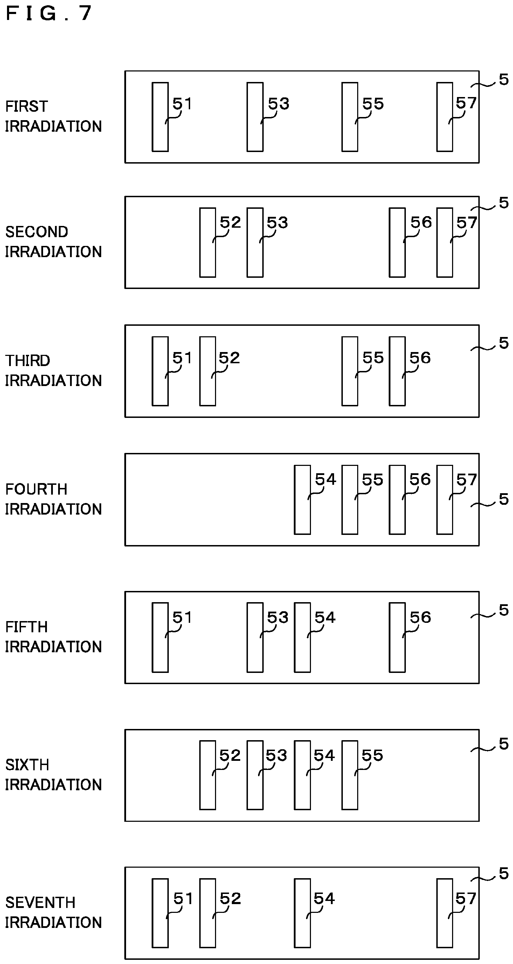

FIG. 7 is a schematic view illustrating a sample 5 that is irradiated with primary light. FIG. 7 illustrates the sample 5 obtained when the first to seventh irradiation are performed. For the first irradiation, light passing through the permeable holes 21, 23, 25 and 27 formed on the pattern mask 201 is applied to the sample 5, so that lines of light 51, 53, 55 and 57 are applied to the sample 5. The other light is blocked by the pattern mask 201, so that the lines of light 52, 54 and 56 are not applied. For the second irradiation, light passing through the permeable holes 22, 23, 26 and 27 formed on the pattern mask 202 is applied to the sample 5, so that lines of light 52, 53, 56 and 57 are applied to the sample 5. Likewise, for the third to seventh irradiation as well, primary light composed of multiple lines of light is applied to the sample 5.

Hence, pattern light composed of multiple lines of light that are arranged apart from each other in the first direction is applied to the sample 5 as primary light. The multiple lines of light correspond to multiple rays of light included in primary light. The multiple lines of light are applied to the sample 5, whereby multiple rays of Raman scattered light are generated from the sample 5. The multiple rays of Raman scattered light correspond to multiple rays of light included in secondary light. Parts of the line of light 51, 52, ..., 57 are in a non-irradiation state, whereby seven types of pattern light different in combinations of the locations of multiple lines of light to be applied to the sample 5 are generated. The seven types of pattern light are sequentially applied to the sample 5. The seven types of pattern light are sequentially applied to the sample 5, to thereby sequentially obtain seven types of secondary light different in the combinations of the locations of generated multiple rays of Raman scattered light. The secondary light including the multiple rays of Raman scattered light enters the spectroscope 13. Hence, the multiple types of secondary light sequentially enter the spectroscope 13. The spectroscope 13 disperses the Raman scattered light included in the incident secondary light. The image pickup device 3 detects Raman scattered light every time the pattern light is applied to the sample 5.

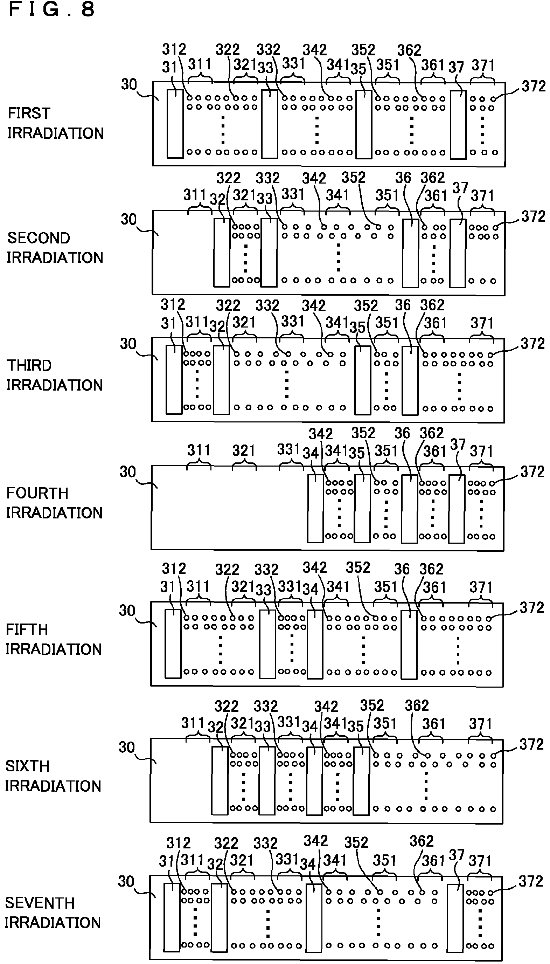

Fig. 8 is a schematic view illustrating the light receiving surface 30 of the image pickup device 3 that receives Raman scattered light in response to irradiation of the sample 5 with pattern light. FIG. 8 illustrates the light receiving surface 30 obtained when the first to seventh irradiation are performed. For the first irradiation, the light receiving lines 31, 33, 35 and 37 corresponding to the irradiation positions of the lines of light 51, 53, 55 and 57 on the sample 5 are generated. For the second irradiation, light receiving lines 32, 33, 36 and 37 corresponding to the irradiation positions of the lines of light 52, 53, 56 and 57 on the sample 5 are generated. Likewise, for the third to seventh irradiation as well, multiple light receiving lines are generated on the light receiving surface 30.

As illustrated in FIG. 8, on the right of the light receiving line 31, the light receiving area 311 is located where the multiple light receiving positions 312 for receiving Raman scattered light are distributed in a plane. Likewise, on the right of the light receiving lines 32, 33, 34, 35, 36 and 37, the light receiving areas 321, 331, 341, 351, 361 and 371 are located where the multiple light receiving positions 322, 332, 342, 352, 362 and 372 are distributed in a plane, respectively. The image pickup device 3, every time pattern light is applied to the sample 5, detects the received light intensities at the respective positions within the light receiving surface 30 and inputs the data representing the detection result to the analysis unit 4. In other words, the image pickup device 3 detects Raman scattered light seven times and inputs data representing the seven detection results to the analysis unit 4. The analysis unit 4 stores the data representing the seven detection results and performs processing of generating a Raman spectrum associated with each of the parts of the sample 5 based on the seven detection results.

The analysis unit 4 generates a Raman spectrum according to an individual processing method for each of the lines of light as to the parts on the sample 5 that are irradiated with multiple lines of light. At the light receiving positions 312 included in the light receiving area 311 that is located between the light receiving line 31 and the light receiving line 32, Raman scattered light generated at the part on the sample 5 that is irradiated with the line of light 51 is received.

The analysis unit 4 can generate a Raman spectrum associated with the part on the sample 5 that is irradiated with the line of light 51 based on the detection results of the received light intensities at the respective positions within the light receiving area 311. For example, the analysis unit 4 extracts the detection result obtained within the light receiving area 311 for the first irradiation from the detection results storing data and generates a Raman spectrum associated with the part on the sample 5 that is irradiated with the line of light 51 based on the extracted detection result.

At the light receiving positions 322 included in the light receiving area 321 that is located between the light receiving line 32 and the light receiving line 33, Raman scattered light generated at the parts on the sample 5 that are irradiated with the line of light 51 and 52 can be received. The detection result obtained within the light receiving area 321 can be superimposition of the detection result caused by the line of light 51 and the detection result caused by the line of light 52. For the second and the sixth irradiation, however, the line of light 52 is applied while the line of light 51 is not applied. Thus, only Raman scattered light generated at the part on the sample 5 that is irradiated with the line of light 52 is received at the light receiving positions 322. The detection result obtained from the light receiving area 321 is a detection result caused only by the line of light 52. The analysis unit 4 can generate a Raman spectrum associated with the part on the sample 5 that is irradiated with the line of light 52 based on the detection results of the received light intensities at the respective positions obtained within the light receiving area 321 for the second irradiation or the sixth irradiation. The analysis unit 4 extracts the detection result obtained from the light receiving area 321 for the second irradiation or the sixth irradiation from the detection results storing data and generates a Raman spectrum associated with the part on the sample 5 that is irradiated with the line of light 52 based on the extracted detection result.

For the first irradiation, at the light receiving positions 332 included in the light receiving area 331 that is located between the light receiving line 33 and the light receiving line 34, Raman scattered light generated at the parts on the sample 5 that are irradiated with the line of light 51 and 53 is received. The detection result obtained within the light receiving area 331 is a detection result caused by the line of light 51 and 53. For the second irradiation, Raman scattered light generated from the parts on the sample 5 that are irradiated with the line of light 52 and 53 is received at the light receiving positions 332. The detection result obtained within the light receiving area 331 is a detection result caused by the line of light 52 and 53. For the third irradiation, Raman scattered light generated at the parts on the sample 5 that are irradiated with the line of light 51 and 52 is received at the light receiving positions 332. The detection result obtained within the light receiving area 331 is a detection result caused by the line of light 51 and 52.

The received light intensities caused by rays of the line of light 51, 52 and 53 included in the received light intensities at the respective positions within the light receiving area 331 are assumed as Result 31, Result 32 and Result 33. The detection results of the received light intensities at the respective positions within the light receiving area 331 obtained at the first, second and third irradiation are assumed as data 31, data 32 and data 33. Vector As=(Result 31, Result 32, Result 33)$^T$ and Vector Bs=(data31, data 32, data 33)$^T$ are defined. The relationship between the vectors $A_3$ and $B_3$ is represented by the following Formula (7).

$$B_3 = S_3 A_3 \ ...(7)$$

$S_3$ in formula (7) is represented by (5). Formula (7) shows that the detection result obtained at the first irradiation is superimposition of the detection results caused by the line of light 51 and the line of light 53, the detection result obtained at the second irradiation is superimposition of the detection results caused by the line of light 52 and the line of light 53, and the detection result obtained at the third irradiation is superimposition of the detection results caused by the line of light 51 and the line of light 52. Formula (7) is transformed to thereby obtain formula (8).

$$A_3 = S_3{}^{-1} B_3 \ ...(8)$$

By using formula (8), vector $A_3$ can be calculated based on the first to third detection results. Result 33 included in vector $A_3$ is the received light intensities caused by the line of light 53. The analysis unit 4 calculates the received light intensities of Raman scattered light caused by the line of light 53 based on the detection results of the received light intensities at the respective positions within the light receiving area 331 at the first to third irradiation to thereby generate a Raman spectrum associated with the part on the sample 5 that is irradiated with the line of light 53. The analysis unit 4 extracts the detection results obtained within the light receiving area 331 for the first to the third irradiation from the detection results storing data and calculates the received light intensities caused by the line of light 53 for the respective positions within the light receiving area 331 by using formula (8). The analysis unit 4 further generates a Raman spectrum associated with the part on the sample 5 that is irradiated with the line of light 53 based on the received light intensities calculated for the respective positions within the light receiving area 331. Note that the analysis unit 4 may perform similar processing based on the detection results for the fifth to seventh irradiation.

At the light receiving positions 342 included in the light receiving area 341 that is located between the light receiving line 34 and the light receiving line 35, only the Raman scattered light generated at the part on the sample 5 that is irradiated with the line of light 54 is received at the fourth irradiation. The detection result obtained within the light receiving area 341 at the fourth irradiation is a detection result caused only by the line of light 54. The analysis unit 4 can generate a Raman spectrum associated with the part on the sample 5 that is irradiated with the line of light 54 based on the detection results of the received light intensities at the respective positions within the light receiving area 341 for the fourth irradiation. The analysis unit 4 extracts the detection result obtained within the light receiving area 341 for the fourth irradiation from the detection results storing data and generates a Raman spectrum associated with the part on the sample 5 that is irradiated with the line of light 54 based on the extracted detection result.

At the light receiving positions 352 included in the light receiving area 351 that is located between the light receiving line 35 and the light receiving line 36, Raman scattered light generated at the parts on the sample 5 that are irradiated with the line of light 51, 52, 53, 54 and 55 can be received. For the light receiving area 351, the first, the fourth and the fifth irradiation are to be noted. For the first and the fifth irradiation, the detection results caused by the line of light 51 and 53 are included in the detection result obtained within the light receiving area 351 while the detection result caused by the line of light 52 is not included in the detection result obtained within the light receiving area 351. For the fourth irradiation, any detection results caused by the line of light 51, 52 and 53 are not included in the detection results obtained within the light receiving area 351. For the first irradiation, the detection result caused by the line of light 54 is not included in the detection result obtained within the light receiving area 351 while for the fourth and the fifth irradiation, the detection result caused by the line of light 54 is included in the detection result obtained within the light receiving area 351. For the first and fourth irradiation, the detection result caused by the line of light 55 is included in the detection result obtained within the light receiving area 351 while for the fifth irradiation, the detection result caused by the line of light 55 is not included in the detection result obtained within the light receiving area 351.

The received light intensities caused by the line of light 51 to 55 included in the received light intensities at the respective positions within the light receiving area 351 are assumed as Result 51 to Result 55. The detection results of the received light intensities at the respective positions within the light receiving area 351 obtained at the first to fifth irradiation are assumed as data 51 to data 55. Vector $A_5=(\text{Result } 51+\text{ Result } 53, \text{Result } 54, \text{Result } 55)^T$ and Vector $B_5=(\text{data51, data 54, data 55})^T$ are defined. The relationship between the vectors $A_5$ and $B_5$ is represented by the following formula (9).

$$B_5 = S_3 A_5 \ ...(9)$$

Formula (9) shows that the detection result obtained at the first irradiation is superimposition of the detection results caused by the line of light 51 and 53 and the detection result caused by the line of light 55, the detection result obtained at the fourth irradiation is superimposition of the detection result caused by the line of light 54 and the detection result caused by the line of light 55, and the detection result obtained at the fifth irradiation is superimposition of the detection results caused by the line of light 51 and 53 and the detection result caused by the line of light 54. Formula (9) is transformed to obtain formula (10).

$$A_5 = S_3^{-1} B_5 \ ...(10)$$

By using formula (10), the vector $A_5$ can be calculated based on the first, fourth and fifth detection results. Result 55 included in vector $A_5$ is light receiving intensities caused by the line of light 55. The analysis unit 4 calculates the received light intensities of Raman scattered light caused by the line of light 55 based on the detection results of the light intensities at the respective positions within the light receiving area 351 for the first, fourth and fifth irradiation to thereby generate a Raman spectrum associated with the part on the sample 5 that is irradiated with the line of light 55. The analysis unit 4 extracts the detection results obtained from the light receiving area 351 for the first, fourth and fifth irradiation from the detection results storing data and calculates the received light intensities caused by the line of light 55 for the respective positions within the light receiving area 351 by using formula (10). The analysis unit 4 further generates a Raman spectrum associated with the part on the sample 5 that is irradiated with the line of light 55 based on the received light intensities calculated for the respective positions within the light receiving area 351.

At the light receiving positions 362 included in the light receiving area 361 that is located between the light receiving line 36 and the light receiving line 37, Raman scattered light generated at the parts on the sample 5 that are irradiated with the line of light 51, 52, ..., 56 can be received. For the light receiving area 361, the second, fourth and sixth irradiation are to be noted. For the second irradiation and the sixth irradiation, the detection results caused by the line of light 52 and 53 are included in the detection result obtained within the light receiving area 361 while the detection result caused by the line of light 51 is not included in the detection result obtained within the light receiving area 361. For the fourth irradiation, any detection results caused by the line of light 51, 52 and 53 are not included in the detection result obtained within the light receiving area 361. For the second irradiation, the detection results caused by the line of light 54 and 55 are not included in the detection result obtained within the light receiving area 361 while for the fourth irradiation and the sixth irradiation, the detection results caused by the line of light 54 and 55 are included in the detection result obtained within the light receiving area 361. For the second irradiation and the fourth irradiation, the detection result caused by the line of light 56 is included in the detection result obtained within the light receiving area 361 while for the sixth irradiation, the detection result caused by the line of light 56 is not included in the detection result obtained within the light receiving area 361.

The received light intensities caused by the line of light 51-56 included in the received light intensities at the respective positions within the light receiving area 361 are assumed as Result 61 to Result 66. The detection results of the received light intensities at the respective positions within the light receiving area 361 obtained at the first to the sixth irradiation are assumed as data 61 to data 66. Vector $A_6$=(Result 62+ Result 63, Result 64 +Result 65, Result 66)$^T$ and Vector $B_6$=(data 62, data 64, data 66)$^T$ are defined. The relationship between the vectors $A_6$ and $B_6$ is represented by the following formula (11).

$$B_6 = S_3\, A_6 \;...(11)$$

Formula (11) shows that the detection result obtained at the second irradiation is superimposition of the detection results caused by the line of light 52 and 53 and the detection result caused by the line of light 56, the detection result obtained at the fourth irradiation is superimposition of the detection results caused by the line of light 54 and 55 and the detection result caused by the line of light 56, and the detection result obtained at the sixth irradiation is superimposition of the detection results caused by the line of light 52 and 53 and the detection results caused by the line of light 54 and 55. Formula (11) is transformed to obtain formula (12).

$$A_6 = S_3^{\,-1} B_6 \;...(12)$$

By using formula (12), the vector $A_6$ can be calculated based on the second, fourth and sixth detection results. Result 66 included in vector $A_6$ is the light receiving intensities caused by the line of light 56. The analysis unit 4 calculates the received light intensities of Raman scattered light caused by the line of light 56 based on the detection results of the received light intensities at the respective positions within the light receiving area 361 for the second, fourth and sixth irradiation to thereby generate a Raman spectrum associated with the part on the sample 5 that is irradiated with the line of light 56. The analysis unit 4 extracts the detection results obtained within the light receiving area 361 for the second, fourth and sixth irradiation from the detection results storing data and calculates the received light intensities caused by the line of light 56 for the respective positions within the light receiving area 361 by using formula (12). The analysis unit 4 may further generate a Raman spectrum associated with the part on the sample 5 that is irradiated with the line of light 56 based on the received light intensities calculated for the respective positions within the light receiving area 361.

At the light receiving positions 372 included in the light receiving area 371 that is located on the right of the light receiving line 37, Raman scattered light generated from the parts on the sample 5 that are irradiated with the line of light 51, 52, ..., 57 can be received. The received light intensities caused by the line of light 51 to 57 included in the received light intensities at the respective positions within the light receiving area 371 are assumed as Result 71 to Result 76. The detection results of the received light intensities at the respective positions within the light receiving area 371 that can be obtained at the first to seventh irradiation are assumed as data 71 to data 77. Vector $A_7$=(Result 71, Result 72, Result 73, Result 74, Result 75, Result 76, Result 77)$^T$ and Vector $B_7$=(data71, data 72, data 73, data 74, data 75, data 76, data 77)$^T$ are defined. The relationship between the vectors $A_7$ and $B_7$ is represented by the following formula (13).

$$B_7 = S_7\, A_7 \;...(13)$$

$S_7$ in formula (13) is represented by formula (6). Formula (13) shows that the detection results obtained at the first to seventh irradiation are superposition of the detection results caused by any of the line of light 51 to 57. Formula (13) is transformed to obtain formula (14).

$$A_7 = S_7^{\,-1} B_7 \;...(14)$$

By using formula (14), vector $A_7$ can be calculated based on the first to seventh detection results. Result 77 included in vector $A_7$ is the light receiving intensities caused by the line of light 57. The analysis unit 4 calculates the received light intensities of Raman scattered light caused by the line of light 57 based on the detection results of the received light intensities at the respective positions within the light receiving area 371 for the first to seventh irradiation to thereby generate a Raman spectrum associated with the part on the sample 5 that is irradiated with the line of light 57. The analysis unit 4 extracts the detection results obtained within the light receiving area 371 for the first to seventh irradiation from the detection results storing data and calculates the received light intensities caused by the line of light 57 for the respective positions within the light receiving area 371 by using formula (14). The analysis unit 4 further generates a Raman spectrum associated with the part on the sample 5 that is irradiated with the line of light 57 based on the received light intensities calculated for the respective positions within the light receiving area 371.

As such, the analysis unit 4 generates a Raman spectrum according to an individual processing method for each of the line of light as to a part on the sample 5 that is irradiated with the line of light 51 to 57. By using the matrix operation, the analysis unit 4 can perform calculation for generating a Raman spectrum at a high speed. Note that the processing method for generating a Raman spectrum is not limited to the above-mentioned processing method. The analysis unit 4 may generate a Raman spectrum by using another processing method. For example, the analysis unit 4 may perform arithmetic operation by using a vector and a matrix of the fifth order for the purpose of generating a Raman spectrum associated with a part on the sample 5 that is irradiated with the line of light 55.

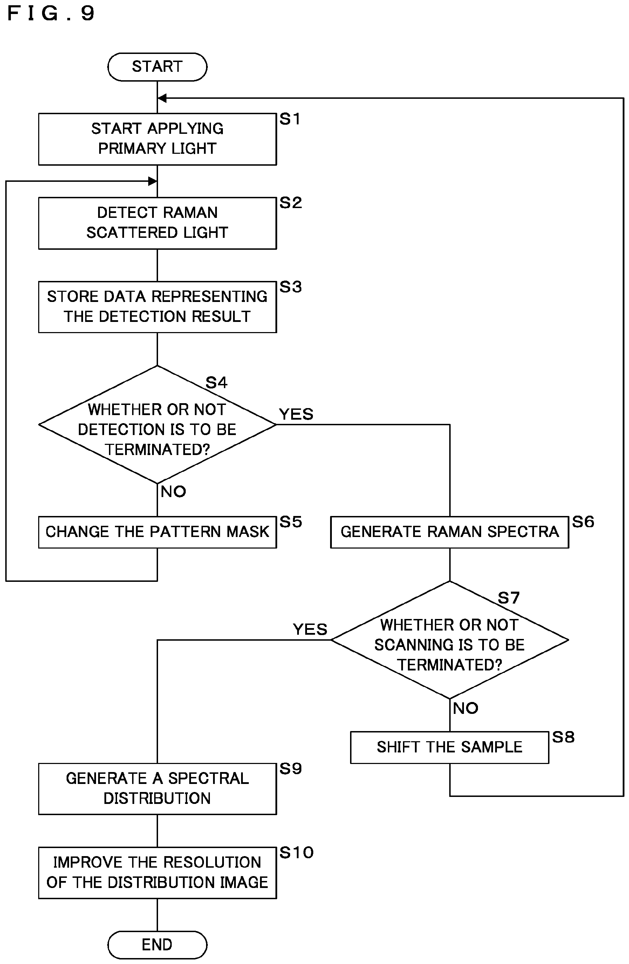

FIG. 9 is a flowchart illustrating a processing procedure to be executed by the spectroscopic analysis device 1. Hereafter, the step will be abbreviated as S. The control unit 15 causes the light source 11 to start applying primary light while the sample 5 is held on the sample holding unit 14 (S1). The light source 11 emits monochromatic light and inputs the light to the multi-spot light generation unit 12. The multi-spot light generation unit 12 generates multi-spot light, and the multi-spot light enters the mask 2. The multi-spot light enters any one of the pattern masks included in the mask 2, and part of the multi-spot light passes through the pattern mask, to thereby generate pattern light. The pattern light is applied to the sample 5. At a part on the sample 5 that is irradiated with the pattern light, Raman scattered light is generated. The Raman scattered light enters the spectroscope 13, and the spectroscope 13 disperses the Raman scattered light and inputs the dispersed light to the image pickup device 3.

The image pickup device 3 detects the incident Raman scattered light (S2). The image pickup device 3 inputs data representing the detection result of the Raman scattered light to the analysis unit 4. The analysis unit 4 stores the data representing the detection result in the storage 44 (S3). The control unit 15 then determines whether or not detection of Raman scattered light is to be terminated (S4). At S4, the control unit 15 determines that the detection is to be terminated if detection of Raman scattered light using a specific number of pattern masks has entirely been performed, and determines that detection is not to be terminated if there is any detection that has not yet been performed. For example, the control unit 15 counts the number of detections of Raman scattered light while changing the pattern masks, and determines that detection is to be terminated if the counted number reaches a predetermined number of times. The control unit 15 may determine that detection is to be terminated in the case where the analysis unit 4 accepts an instruction of terminating the detection by the user operating the operation unit 45.

If the detection of Raman scattered light is not to be terminated (S4: NO), the control unit 15 activates the mask change unit 17 so as to change the pattern mask where the multi-spot light enters (S5). At S5, the mask change unit 17 changes the pattern mask on the optical axis of the primary light by moving the mask 2. The spectroscopic analysis device 1 then returns the processing to S2 to repeat the processing from S2 to S5. The spectroscopic analysis device 1 sequentially applies seven types of pattern light to the sample 5 using the pattern masks 201, 202, ..., 207 by repeating the processing from S2 to S5 and detects the Raman scattered light generated for each of the pattern light.

If the detection of Raman scattered light is to be terminated (S4: YES), the analysis unit 4 generates Raman spectra associated with parts on the sample 5 that is irradiated with the line of light 51-57 based on multiple detection results storing data (S6). The arithmetic unit 41 executes arithmetic operation according to the computer program 441 to cause the analysis unit 4 to execute the following processing. At S6, the analysis unit 4 generates Raman spectra associated with the parts on the sample 5 that is irradiated with the line of light 51-57. The analysis unit 4 stores in the storage 44 data of the generated Raman spectra by associating the data with information representing the parts on the sample 5 that is irradiated with the line of light 51-57. The control unit 15 may cause the mask change unit 17 to perform processing of returning the mask 2 to the initial state or may cause the light source 11 to temporarily stop illuminating. The processing at S6 corresponds to a processing unit.

The control unit 15 then determines whether or not scanning of the sample 5 is to be terminated (S7). For example, in the case where the range to be scanned on the surface of the sample 5 is previously designated and the designated range has entirely been scanned, the control unit 15 determines that the scanning is to be terminated. The control unit 15 may determine that the scanning is to be terminated in the case where the analysis unit 4 accepts an instruction of terminating the scanning by the user operating the operation unit 45. If the scanning is not to be terminated (S7: NO), the control unit 15 causes the driving unit 16 to move the sample holding unit 14 to thereby shift the sample 5 (S8) and returns the processing to S1. For example, the driving unit 16 moves the sample 5 in the first direction so that next line of light 51 is applied to the position between the part that is irradiated with the line of light 51 and the part that is irradiated with the line of light 52. The driving unit 16 may move the sample 5 by a distance in the first direction from the part that is irradiated with the line of light 51 to the part that is irradiated with the line of light 57 or longer. The driving unit 16 may move the sample 5 by a distance in the second direction of the line of light 51, 52, .... 57 or longer. By repeating the processing at S1 to S8, the spectroscopic analysis device 1 scans the sample 5 with primary light and generates a Raman spectrum of the Raman scattered light generated at each of the parts of the sample 5. The processing at S1 to S8 corresponds to a scanning unit.

If the scanning is to be terminated (S7: YES), the analysis unit 4 generates a spectral distribution in which respective parts of the sample 5 are associated with the Raman spectra of the Raman scattered light generated at the respective parts, and generates a distribution image of a substance in a specific state based on the spectral distribution (S9). At S9, the analysis unit 4 analyzes the state of the substance based on the Raman spectra and generates the distribution image of the substance in a specific state. The analysis unit 4 may identify a substance contained in the sample 5 based on the Raman spectra and may also generate the distribution image of the identified substance. The analysis unit 4 may generate the distribution image of the Raman spectra. The analysis unit 4 further stores the data of the distribution image in the storage 44. The analysis unit 4 may display the generated distribution image on the display unit 46. The processing at S9 corresponds to an image generation unit.

The analysis unit 4 performs processing of improving the resolution of the distribution image of the substance in a specific state (S10). At S10, the analysis unit 4 improves the resolution of the distribution image by using a super-resolution technology. For example, the analysis unit 4 previously stores the correspondences between the features of a high resolution image and the features of a low resolution image. The analysis unit 4 calculates features of the distribution image, specifies the features of the high resolution image corresponding to the calculated features, and generates an image based on the specified features to thereby generate a distribution image with improved resolution. For example, the analysis unit 4 generates a distribution image with improved resolution by using a learning model so trained as to output the features of high resolution image when the features of the low resolution image are input. The analysis unit 4 stores the data of the distribution image with improved resolution. The control unit 15 may display the distribution image with improved resolution on the display unit 46. The processing at S10 corresponds to a super-resolution unit. The spectroscopic analysis device 1 does not necessarily perform the processing at S10. The spectroscopic analysis device 1 then ends the processing.

As described above, the spectroscopic analysis device 1 generates multiple types of pattern light each composed of multiple lines of light that are arranged according to a predetermined pattern, sequentially applies the multiple types of pattern light to the sample 5, disperses Raman scattered light generated from the sample 5 and detects the Raman scattered light with the image pickup device 3. The spectroscopic analysis device 1 can generate a spectrum of the Raman scattered light by performing the processing depending on the predetermined pattern based on multiple detection results. Scanning of the sample 5 with primary light composed of multiple rays of light can reduce the scanning time in comparison with scanning of the sample with monochromatic irradiation light. The spectroscopic analysis device 1 can thus analyze the sample 5 in a short period of time. The spectroscopic analysis device 1 further employs line of light as irradiation light. Scanning of the sample 5 with line of light can reduce the scanning time in comparison with the scanning of a sample with point-like light. The spectroscopic analysis device 1 can thus analyze the sample 5 in a short period of time.

Moreover, the spectroscopic analysis device 1 generates a distribution image of a substance in a specific state based on spectral distribution and improves the resolution of the distribution image by using the super-resolution technology. Even if roughly scanning the sample 5, for example, the spectroscopic analysis device 1 can generate a distribution image with a resolution equivalent to that obtained when fine scanning is performed. Since rough scanning of the sample 5 can reduce the scanning time, the spectroscopic analysis device 1 can analyze the sample 5 in a short period of time.

Embodiment 2

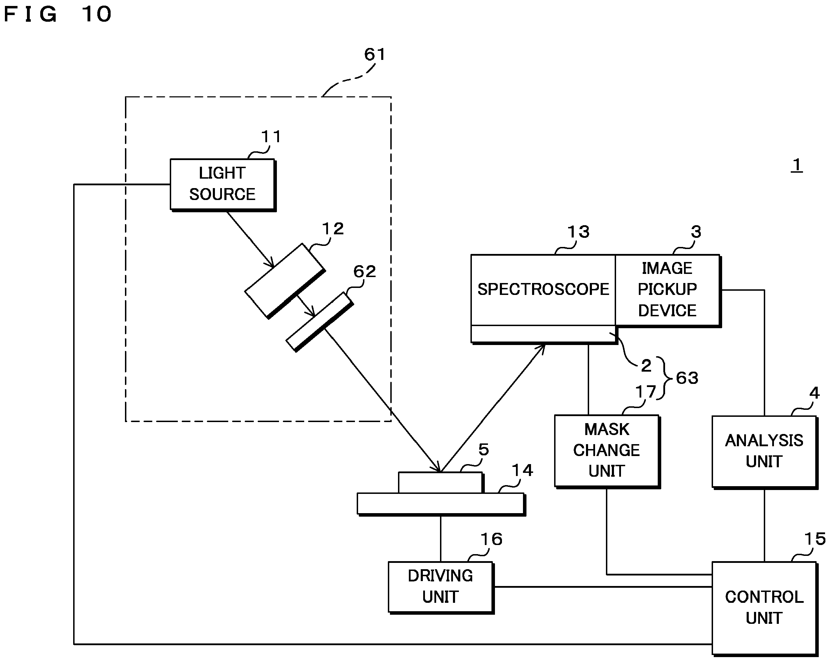

FIG. 10 is a block diagram illustrating the configuration of a spectroscopic analysis device 1 according to Embodiment 2. In Embodiment 2, one type of primary light is used while multiple types of secondary light are generated by blocking part of the multiple rays of Raman scattered light generated from a sample 5. A fixed mask 62 is placed at a position where multi-spot light generated by the multi-spot light generation unit 12 enters. The fixed mask 62 is a photomask formed with multiple light permeable portions. Light passes through the multiple light permeable portions to thereby generate primary light composed of multiple rays of light. The primary light generated by the fixed mask 62 is applied to the sample 5. The fixed mask 62 is fixed, and thus a pattern of multiple rays of light included in the primary light is unchanged. The light source 11, the multi-spot light generation unit 12 and the fixed mask 62 constitute the irradiation unit 61.

The mask 2 including multiple pattern masks is disposed between the sample holding unit 14 and the spectroscope 13. Light generated from the sample 5 enters any one of the pattern masks included in the mask 2, and the light passing through the pattern mask enters the spectroscope 13. The mask 2 is desirably disposed at a position where the light generated from the sample 5 is focused by an optical system. The spectroscopic analysis device 1 is provided with the mask change unit 17 for changing the pattern mask where light enters by moving the mask 2. The mask 2 has a configuration similar to that in Embodiment 1 shown in FIG. 6. The mask 2 and the mask change unit 17 in Embodiment 2 constitute a secondary light generation unit 63. The configurations of the other parts of the spectroscopic analysis device 1 are similar to those in Embodiment 1.

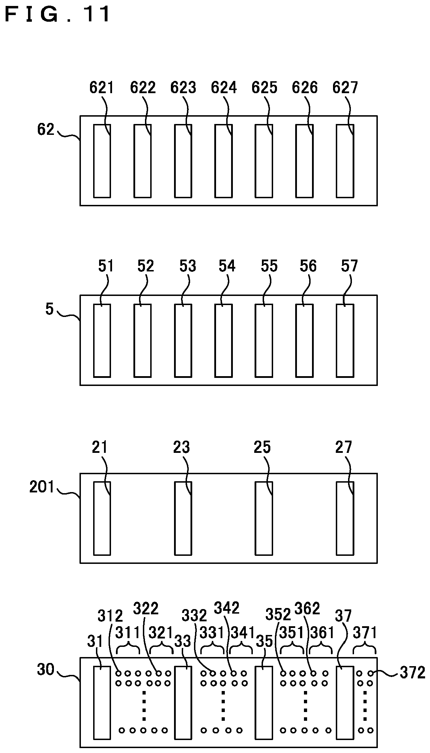

FIG. 11 is a schematic diagram illustrating the fixed mask 62, the sample 5 irradiated with primary light, the pattern mask and the light receiving surface 30 of the image pickup device 3 that receives Raman scattered light. The fixed mask 62 is made of a light blocking material and formed in a flat plate. In the example illustrated in FIG. 11, the fixed mask 62 is formed with seven permeable holes 621, 622, 623, 624, 625, 626, 627 that are lined up apart from each other on the flat plate. The number of permeable holes formed on the fixed mask 62 may be a number other than seven. The spectroscopic analysis device 1 inputs multi-spot light generated by the multi-spot light generation unit 12 to the fixed mask 62. Part of the multi-spot light passes through the light permeable holes 621, ..., 627 while the other part of the multi-spot light is blocked by the fixed mask 62. Thus, primary light composed of seven lines of light that are arranged apart from each other is generated.

The primary light is applied to the sample 5. In the example illustrated in FIG. 11, seven lines of light 51, 52, ..., 57 are applied to the surface of the sample 5, and Raman scattered light is generated from the parts on the sample 5 that are irradiated with the line of light. The generated multiple rays of Raman scattered light enter the pattern mask. In the example illustrated in FIG. 11, the multiple rays of Raman scattered light enter the pattern mask 201. The pattern mask 201 is formed with permeable holes 21, 23, 25 and 27. Raman scattered light generated by irradiation with the lines of light 51, 53, 55 and 57 pass through the permeable holes 21, 23, 25 and 27, respectively. Raman scattered light generated by irradiation with the lines of light 52, 54 and 56 are blocked by the light blocking portions of the pattern mask 201. Secondary light including the multiple rays of Raman scattered light passing through the pattern mask 201 enters the spectroscope 13.

The spectroscope 13 disperses the incident multiple rays of Raman scattered light, and the dispersed light is received by the image pickup device 3. In the example illustrated in FIG. 11, light receiving lines 31, 33, 35 and 37 corresponding to the irradiation positions of the lines of light 51, 53, 55 and 57 on the sample 5 are generated. However, light receiving lines corresponding to the irradiation positions of the lines of light 52, 54 and 56 are not generated. Other than the light receiving lines 31, 33, 35 and 37, light receiving areas 311, 321, 331, 341, 351, 361 and 371 are present each including multiple light receiving positions 312, 322, 332, 342, 352, 362 and 372 distributed in a plane, respectively.

As illustrated in FIG. 11, the image pickup device 3 detects Raman scattered light while the secondary light passing through the pattern mask 201 enters the spectroscope 13. The mask change unit 17 then changes the pattern mask where Raman scattered light generated from the sample 5 enters to the pattern mask 202 by moving the mask 2. The secondary light passing through the pattern mask 202 enters the spectroscope 13, which allows second incidence of the secondary light to the spectroscope 13. The image pickup device 3 performs second detection of Raman scattered light. Changing of the pattern masks, inputting of secondary light to the spectroscope 13 and detecting of Raman scattered light are repeated. As in Embodiment 1, the pattern masks 201, 202, ..., 207 are sequentially used to perform input of secondary light to the spectroscope 13 and detection of Raman scattered light seven times.

By changing the pattern masks, the combination between light that passes through the pattern mask and enters the spectroscope 13 and light that is blocked by the pattern mask out of multiple rays of Raman scattered light generated from the sample 5 is thus changed. This sequentially generates seven types of secondary light. The generated secondary light is pattern light composed of multiple rays of light that are arranged apart from each other according to a predetermined pattern defined by the pattern mask. According to the multiple patterns defined by the pattern masks 201, 202, ..., 207, combinations of the locations of the multiple rays of light included in the secondary light are sequentially changed, thereby sequentially generate multiple types of secondary light.

The generated secondary light sequentially enters the spectroscope 13 and is dispersed. The dispersed light is detected by the image pickup device 3. The light receiving surfaces 30 obtained when the first to seventh generation of secondary light are performed are the same as those in FIG. 8 of Embodiment 1. Every time secondary light is generated, the image pickup device 3 detects the received light intensities at the respective positions within the light receiving surface 30 and inputs the data representing the detection result to the analysis unit 4. In other words, the image pickup device 3 performs detection of Raman scattered light seven times and inputs data representing the seven detection results to the analysis unit 4. The analysis unit 4 stores the data representing the seven detection results and performs processing of generating a Raman spectrum associated with each of the parts on the sample 5 based on the seven detection results as in Embodiment 1.

The spectroscopic analysis device 1 executes the processing from S1 to S10 as shown in FIG. 9. The control unit 15 causes the light source 11 to start applying primary light while the sample 5 is held on the sample holding unit 14 (S1). The light source 11 emits monochromatic light and inputs the light to the multi-spot light generation unit 12. The multi-spot light generation unit 12 generates multi-spot light, and the multi-spot light enters the fixed mask 62. Part of the multi-spot light passes through the fixed mask 62 to generate primary light including lines of light 51, 52, ..., 57. The primary light is applied to the sample 5, and at the multiple parts on the sample 5 that are irradiated with the light, Raman scattered light are generated. The light including multiple rays of Raman scattered light enters any one of the pattern masks included in the mask 2. Part of the light passes through the pattern mask to thereby generate secondary light including multiple rays of Raman scattered light. The secondary light enters the spectroscope 13 which then disperses multiple rays of Raman scattered light included in the secondary light. The dispersed Raman scattered light then enters the image pickup device 3.

The image pickup device 3 detects the incident Raman scattered light (S2). The image pickup device 3 inputs data representing the detection result of the Raman scattered light to the analysis unit 4. The analysis unit 4 stores the data representing the detection result in the storage 44 (S3). The control unit 15 determines whether or not the detection of Raman scattered light is to be terminated (S4). If the detection of Raman scattered light is not to be terminated (S4: NO), the control unit 15 activates the mask change unit 17 so as to change the pattern masks where light including multiple rays of Raman scattered light generated from the sample 5 enters (S5). At S5, the mask change unit 17 moves the mask 2 to change the pattern masks where light from the sample 5 enters. The spectroscopic analysis device 1 then returns the processing to S2 to repeat the processing from S2 to S5. By repeating the processing from S2 to S5, the spectroscopic analysis device 1 applies seven types of secondary light to the spectroscope 13 using the pattern masks 201, 202, ..., 207 and detects the Raman scattered light included in each of the secondary light.

If detection of the Raman scattered light is to be terminated (S4: YES), the analysis unit 4 generates a Raman spectrum (S6) as in Embodiment 1. The control unit 15 then determines whether or not scanning of the sample 5 is to be terminated (S7). If the scanning is not to be terminated (S7: NO), the control unit 15 causes the driving unit 16 to move the sample holding unit 14 to thereby shift the sample 5 (S8) and returns the processing to S1. By repeating the processing from S1 to S8, the spectroscopic analysis device 1 scans the sample 5 with primary light and generates a Raman spectrum of the Raman scattered light generated from each part of the sample 5.

If the scanning is to be terminated (S7: YES), the analysis unit 4 generates a spectral distribution and generates a distribution image of a substance in a specific state as in Embodiment 1 (S9). The analysis unit 4 then performs processing of improving the resolution of the distribution image as in Embodiment 1 (S10). The spectroscopic analysis device 1 does not necessarily perform the processing at S10. The spectroscopic analysis device 1 then ends the processing.

As illustrated above, in Embodiment 2, the spectroscopic analysis device 1 applies primary light composed of multiple lines of light to the sample 5 and generates multiple types of secondary light different in combination of multiple rays of light that are to be input to the spectroscope 13 out of the multiple rays of light generated from the sample 5. The spectroscopic analysis device 1 sequentially inputs the multiple types of secondary light to the spectroscope 13, disperses multiple rays of Raman scattered light included in the secondary light at the spectroscope 13, detects the dispersed light at the image pickup device 3 and generates a spectrum of the Raman scattered light at the analysis unit 4. Note that the spectroscopic analysis device 1 may be configured to generate primary light composed of multiple lines of light in a method other than the method using the fixed mask 62.

In Embodiment 2 as well, by scanning the sample 5 with primary light composed of multiple lines of light, the spectroscopic analysis device 1 can reduce the scanning time in comparison with scanning of the sample with monochromatic irradiation light. The spectroscopic analysis device 1 can thus analyze the sample 5 in a short period of time. Moreover, the spectroscopic analysis device 1 performs processing of improving the resolution of the distribution image as in Embodiment 1, which can reduce the scanning time and can analyze the sample 15 in a short period of time.

Though the form in which processing is performed using all the pattern masks 201, 202, ..., 207 is shown in Embodiments 1 and 2, the spectroscopic analysis device 1 may perform spectroscopic analysis without using a part of the multiple pattern masks. For example, the spectroscopic analysis device 1 executes the processing from S2 to S5 using the patter masks 201 to 206 and then executes the processing at and after S6 without executing the processing using the pattern mask 207. In this form, a part from which Raman spectrum cannot be generated occurs, and a part from which a distribution of a substance in a specific state cannot be obtained may be included in the distribution image generated at S9. In other words, the distribution image according to the pattern obtained from the matrix from which part of the rows in the S matrix is removed is obtained. The spectroscopic analysis device 1 generates a distribution of a substance in a specific state as to the part from which the distribution cannot be obtained as well by improving the resolution of the distribution image of the Raman spectrum by the processing at S10. The spectroscopic analysis device 1 may eliminate the use of two pattern masks. For example, the spectroscopic analysis device 1 does not necessarily perform the processing using the pattern masks 206 and 207. In this case as well, a distribution image with resolution substantially similar to the resolution when all the pattern masks are used can be generated by improving the resolution by the processing at S10. The mask 2 may not necessarily include unused pattern masks. Hence, the spectroscopic analysis device 1 can reduce the number of repetitions of the processing from S2 to S5. The number of repetitions of the processing from S2 to S5 is reduced to thereby shorten the time required for the processing. Thus, the spectroscopic analysis device 1 can analyze the sample 5 in a short period of time.

The spectroscopic analysis device 1 may also be configured to perform processing while ignoring a part of the multiple lines of light included in the primary light. For example, the spectroscopic analysis device 1 may perform processing while ignoring the line of light 57. More specifically, the spectroscopic analysis device 1 may perform the processing at S6 without using the received light intensities at the respective positions within the light receiving area 371. Since the line of light 57 does not have an influence on the light receiving areas other than the light receiving area 371, the processing with the line of light 57 ignored can be performed. The processing performed by the spectroscopic analysis device 1 in such a form is processing according to a pattern obtained from a matrix in which part of the columns is removed from the S matrix. Alternatively, the mask 2 may be configured so as not to have the permeable holes and the light blocking portions corresponding to any one of the columns of the S matrix. The spectroscopic analysis device 1 including such a mask 2 according to this form executes processing according to the pattern obtained from the matrix in which part of the columns is removed from the S matrix. In these forms as well, the spectroscopic analysis device 1 can generate a distribution image so as not to lower the resolution by performing the processing at S10. In these forms, the amount of necessary processing is reduced, so that the spectroscopic analysis device 1 can analyze the sample 5 in a short period of time.

Though the form in which seven lines of light are combined to generate primary light is shown in Embodiments 1 and 2, the spectroscopic analysis device 1 may be configured to generate primary light using a certain number of lines of light other than seven in combination. For example, by having been provided with a mask 2 with permeable holes and light blocking portions corresponding to one column in the S matrix removed or by having the fixed mask 62 including six permeable holes, the spectroscopic analysis device 1 may generate primary light composed of six lines of light in combination. For example, by having been provided with the mask 2 formed according to the third order S matrix or with the fixed mask 62 having three permeable holes, the spectroscopic analysis device 1 may generate primary light composed of three lines of light in combination. For example, the spectroscopic analysis device 1 may be configured to generate primary light using eight or more lines of light in combination. The spectroscopic analysis device 1 may also be configured to employ a pattern obtained based on the Hadamard matrix of the eighth order or higher.

Though the form in which pattern light according to a predetermined pattern is obtained based on the Hadamard matrix is shown in Embodiments 1 and 2, the spectroscopic analysis device 1 may be configured to employ pattern light according to another pattern. Though the form in which the spectroscopic analysis device 1 generates pattern light using the mask 2 is shown in Embodiments 1 and 2, the spectroscopic analysis device 1 may be configured to generate pattern light by using an optical component other than the mask. For example, the spectroscopic analysis device 1 may be configured to generate pattern light using a digital mirror device (DMD). Though the form in which the multi-spot light generation unit 12 is employed is shown in Embodiments 1 and 2, the spectroscopic analysis device 1 may also be configured to generate widely-distributed light by a method other than the method employing the multi-spot light generation unit 12.

The form in which Raman scattered light included in secondary light generated from the sample 5 is detected is shown in Embodiments 1 and 2. In comparison with other types of a spectrum of the secondary light such as fluorescence or the like, a Raman spectrum causes sharper peaks with a smaller wavelength width. Since the extent of the light receiving positions within the light receiving surface 30 is thus small and the intensities of the received light is high, the right receiving positions and the received light intensities can easily be specified, and wavelength of secondary light and the intensities of peaks in a spectrum can easily be obtained. The form of detecting Raman scattered light included in secondary light thus has an advantageous effect of easily obtaining a spectrum. Note that the spectroscopic analysis device 1 may be configured so as to detect light included in secondary light other than Raman scattered light. For example, the spectroscopic analysis device 1 may be configured to detect photoluminescence or fluorescence included in secondary light. Though multiple rays of light included in primary light are assumed as lines of light in Embodiments 1 and 2, multiple rays of light included in primary light may be spots of light. Even in the case where multiple rays of light included in primary light is spots of light, the spectroscopic analysis device 1 can reduce the scanning time.

It is to be understood that the embodiments disclosed here are illustrative in all respects and not restrictive. The scope of the present invention is defined by the appended claims, not by the above-mentioned meaning, and all changes that fall within the meanings and the bounds of the claims, or equivalence of such meanings and bounds are intended to be embraced by the claims.

[Description of Reference Numerals]

| | |
|---|---|
| 1 | spectroscopic analysis device |
| 11 | light source |
| 12 | multi-spot light generation unit |
| 13 | spectroscope |
| 14 | sample holding unit |

| | |
|---|---|
| 15 | control unit |
| 2 | mask |
| 21, 22, 23, 24, 25, 26, 27 | permeable hole |
| 201, 202, 203, 204, 205, 206, 207 | pattern mask |
| 3 | image pickup device |
| 30 | light receiving surface |
| 31, 32, 33, 34, 35, 36, 37 | light receiving line |
| 311, 321, 331, 341, 351, 361, 371 | light receiving area |
| 301, 302, 312, 322, 332, 342, 352, 362, 372 | light receiving position |
| 4 | analysis unit |
| 40 | recording medium |
| 41 | arithmetic unit |
| 44 | storage |
| 441 | computer program |
| 5 | sample |
| 51, 52, 53, 54, 55, 56, 57 | line of light |
| 501 | irradiation light |
| 61 | irradiation unit |
| 62 | fixed mask |
| 621, 622, 623, 624, 625, 626, 627 | permeable hole |
| 63 | secondary light generation unit |

**Claims**

1.  A spectroscopic analysis device, **characterized by** comprising:

    an irradiation unit that irradiates a sample with primary light composed of a plurality of rays of light that are arranged apart from each other;
    a spectroscope that disperses secondary light composed of a plurality of rays of light and generated by irradiation of the sample with the primary light;
    an image pickup device that detects light dispersed by the spectroscope; and
    a processing unit that performs processing of generating spectra of a plurality of rays of light included in the secondary light based on a detection result obtained from the image pickup device, wherein
    the spectroscope sequentially receives a plurality of types of secondary light that vary in combination of locations of a plurality of rays of light included in each of the secondary light according to a plurality of predetermined patterns, and disperses the plurality of types of secondary light received, and
    the processing unit generates the spectra by performing processing according to the plurality of predetermined patterns based on a plurality of detection results obtained from the image pickup device in response to dispersion of the plurality of types of secondary light at the spectroscope.

2.  The spectroscopic analysis device according to claim 1, **characterized in that**

    the irradiation unit sequentially generates a plurality of types of primary light different from each other by varying a combination of locations of a plurality of rays of light included in each of the primary light according to the plurality of predetermined patterns, and
    the spectroscope receives the plurality of types of secondary light generated by irradiation of the sample with the plurality of types of primary light.

3.  The spectroscopic analysis device according to claim 2, **characterized in that**
    the irradiation unit generates the plurality of types of primary light by using a plurality of masks that vary in combination of a plurality of light-transmitting positions according to the plurality of predetermined patterns.

4.  The spectroscopic analysis device according to claim 1, **characterized by** further comprising

    a secondary light generation unit that sequentially generates the plurality of types of secondary light by blocking part of a plurality of rays of light generated by irradiation of the sample with the primary light such that the part of the plurality of rays of light does not enter the spectroscope and by changing, according to the plurality of predetermined patterns, a combination of the part of the plurality of rays of light that is blocked and part of the plurality of rays of light that enters the spectroscope without being blocked, wherein
the spectroscope receives the plurality of types of secondary light generated by the secondary light generation unit.

**5.** The spectroscopic analysis device according to claim 4, **characterized in that**
the secondary light generation unit generates the plurality of types of secondary light by using a plurality of masks that vary, according to the plurality of predetermined patterns, in combination of a plurality of rays of light that pass through without being blocked in a plurality of rays of light generated by irradiation of the sample with the primary light.

**6.** The spectroscopic analysis device according to any one of claims 1 to 5, **characterized by** further comprising:

a scanning unit that scans the sample with the primary light;
an image generation unit that generates a spectral distribution that associates parts on the sample on which said scanning is performed with spectra of light included in secondary light generated from the parts, and generates a distribution image of a substance in a specific state based on the spectral distribution, and
a super-resolution unit that improves a resolution of the distribution image using a super-resolution technology.

**7.** The spectroscopic analysis device according to any one of claims 1 to 6, **characterized in that**,

on a light receiving surface of the image pickup device, a plurality of light receiving positions corresponding to parts on the sample that are irradiated with the plurality of rays of light are arranged apart from each other in a direction corresponding to a direction in which a plurality of rays of light included in the primary light are arranged, and
light receiving positions of the dispersed light are arranged depending on wavelengths at positions different from the plurality of light receiving positions and are arranged in a direction corresponding to a direction in which the plurality of rays of light are arranged.

**8.** The spectroscopic analysis device according to any one of claims 1 to 7, **characterized in that**
the processing unit generates the spectra according to an individual processing method for each of the plurality of rays of light included in the secondary light.

**9.** The spectroscopic analysis device according to claim 8, **characterized in that**
the processing method includes a matrix operation.

**10.** The spectroscopic analysis device according to claim 9, **characterized in that**

the plurality of predetermined patterns are patterns of elements included in a plurality of rows or a plurality of columns of an S matrix obtained by converting an element +1 to 0 and converting an element -1 to 1 in elements of a Hadamard matrix of the fourth order or higher and removing a first row and a first column from the Hadamard matrix, and
the matrix operation is an operation using the S matrix.

**11.** The spectroscopic analysis device according to any one of claims 1 to 10, **characterized in that**

a plurality of rays of light included in the primary light are lines of light extending along a second direction crossing a first direction in which the plurality of rays of light are arranged, and
on a light receiving surface of the image pickup device, a plurality of light receiving lines each including light receiving positions corresponding to parts on the sample that are irradiated with the lines of light arranged in a direction corresponding to the second direction are arranged apart from each other in a direction corresponding to the first direction.

**12.** The spectroscopic analysis device according to any one of claims 1 to 11, **characterized in that**

the secondary light includes Raman scattered light, and
the processing unit generates a spectrum of Raman scattered light.

**13.** A spectroscopic analysis method, **characterized by** comprising:

irradiating a sample with primary light composed of a plurality of rays of light that are arranged apart from each other;

sequentially dispersing a plurality of types of secondary light that are generated by irradiation of the sample with the primary light and vary in combination of locations of a plurality of rays of light included in each of the secondary light according to a plurality of predetermined patterns;

detecting dispersed light by an image pickup device; and

generating a spectrum of a plurality of rays of light included in the secondary light by performing processing according to the plurality of predetermined patterns based on detection results of multiple times obtained from the image pickup device in response to dispersing the plurality of types of secondary light.

14. A computer program, **characterized by** causing a computer to execute processing of,

based on detection results of multiple times obtained by irradiating a sample with primary light composed of a plurality of rays of light that are arranged apart from each other, by sequentially dispersing a plurality of types of secondary light that vary in combination of locations of a plurality of rays of light included in each of the secondary light according to a plurality of predetermined patterns and by detecting dispersed light on the image pickup device, generating spectra of a plurality of rays of light included in the secondary light by performing processing according to the plurality of predetermined patterns.

**FIG 1**

EP 4 123 290 A1

F I G . 2

~4

~41
ARITHMETIC UNIT

~42
MEMORY

~43
DRIVE UNIT

~40

~45
OPERATION UNIT

~44
STORAGE
~441
COMPUTER
PROGRAM

~46
DISPLAY UNIT

~47
INTERFACE UNIT

FIG.3

INTENSITY

0

0                    RAMAN SHIFT

# F I G . 4

5

51

SECOND DIRECTION

FIRST DIRECTION

311

312

31

30

FOURTH DIRECTION

THIRD DIRECTION

FIG.5

SECOND DIRECTION

FIRST DIRECTION

FOURTH DIRECTION

THIRD DIRECTION

FIG.6

F I G . 7

FIRST
IRRADIATION

51  53  55  57  5

SECOND
IRRADIATION

52 53  56 57  5

THIRD
IRRADIATION

51 52  55 56  5

FOURTH
IRRADIATION

54 55 56 57  5

FIFTH
IRRADIATION

51  53 54  56  5

SIXTH
IRRADIATION

52 53 54 55  5

SEVENTH
IRRADIATION

51 52  54  57  5

FIG. 8

FIRST
IRRADIATION

SECOND
IRRADIATION

THIRD
IRRADIATION

FOURTH
IRRADIATION

FIFTH
IRRADIATION

SIXTH
IRRADIATION

SEVENTH
IRRADIATION

# F I G . 9

```
                    ┌─────────┐
                    │  START  │
                    └────┬────┘
                         │
         ┌───────────────▼───────────────┐ S1
         │       START APPLYING          │
         │       PRIMARY LIGHT           │
         └───────────────┬───────────────┘
                         │
         ┌───────────────▼───────────────┐ S2
         │        DETECT RAMAN           │
         │       SCATTERED LIGHT         │
         └───────────────┬───────────────┘
                         │
         ┌───────────────▼───────────────┐ S3
         │   STORE DATA REPRESENTING     │
         │    THE DETECTION RESULT       │
         └───────────────┬───────────────┘
                         │
                    ╱────▼────╲  S4
                   ╱  WHETHER   ╲        YES
                  ╱   OR NOT     ╲──────────────┐
                  ╲ DETECTION IS  ╱             │
                   ╲TO BE        ╱              │
                    ╲TERMINATED?╱               │
                         │ NO                   │
                         │                      │
   ┌─────────────────────▼──────┐ S5   ┌────────▼─────────────────┐ S6
   │   CHANGE THE PATTERN MASK  │      │  GENERATE RAMAN SPECTRA  │
   └────────────────────────────┘      └────────┬─────────────────┘
                                                 │
                                            ╱────▼────╲  S7
                         YES               ╱ WHETHER   ╲
                  ┌────────────────────────╲ OR NOT     ╱
                  │                         ╲SCANNING IS╱
                  │                          ╲TO BE    ╱
                  │                           ╲TERMINATED?╱
                  │                                │ NO
                  │                      ┌─────────▼────────┐ S8
                  │                      │  SHIFT THE SAMPLE│
                  │                      └──────────────────┘
   ┌──────────────▼─────────────┐ S9
   │     GENERATE A SPECTRAL    │
   │       DISTRIBUTION         │
   └──────────────┬─────────────┘
                  │
   ┌──────────────▼─────────────┐ S10
   │  IMPROVE THE RESOLUTION    │
   │ OF THE DISTRIBUTION IMAGE  │
   └──────────────┬─────────────┘
                  │
             ┌────▼────┐
             │   END   │
             └─────────┘
```

FIG 10

FIG.11

## INTERNATIONAL SEARCH REPORT

| International application No. |
| --- |
| PCT/JP2021/011564 |

A. CLASSIFICATION OF SUBJECT MATTER
G01N 21/27(2006.01)i; G01N 21/65(2006.01)i
FI: G01N21/65; G01N21/27 E

According to International Patent Classification (IPC) or to both national classification and IPC

B. FIELDS SEARCHED

Minimum documentation searched (classification system followed by classification symbols)
G01N21/00-21/74; G01J3/44

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | US 2017/0052118 A1 (QUEEN'S UNIVERSITY AT KINGSTON) 23 February 2017 (2017-02-23) paragraphs [0016], [0034], [0035], [0042], [0045]-[0062], [0076]-[0079], fig. 1-4 | 1-10, 12-14<br>11 |
| Y | JP 3377209 B2 (RENISHAW TRANSDUCER SYSTEMS LIMITED) 17 February 2003 (2003-02-17) page 4, column 7, lines 15-33, fig. 5 | 11 |
| A | US 2004/0218172 A1 (DEVERSE, Richard A.) 04 November 2004 (2004-11-04) paragraphs [0280], [0281], [0285]-[0290], [0296], fig. 72-74 | 1-14 |
| A | JP 2005-515423 A (CHEMIMAGE CORPORATION) 26 May 2005 (2005-05-26) paragraph [0094] | 1-14 |
| A | JP 2018-128325 A (NANOPHOTON CORPORATION) 16 August 2018 (2018-08-16) | 1-14 |

☒ Further documents are listed in the continuation of Box C.　　☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 20 May 2021 (20.05.2021) | 08 June 2021 (08.06.2021) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2021/011564 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-180733 A (JASCO CORPORATION) 13 October 2016 (2016-10-13) | 1-14 |
| A | JP 2006-71611 A (HAMAMATSU PHOTONICS K.K.) 16 March 2006 (2006-03-16) | 1-14 |

Form PCT/ISA/210 (continuation of second sheet) (January 2015)

INTERNATIONAL SEARCH REPORT

Information on patent family members

| International application No. |
| --- |
| PCT/JP2021/011564 |

| Patent Documents referred in the Report | Publication Date | Patent Family | Publication Date |
| --- | --- | --- | --- |
| US 2017/0052118 A1 | 23 Feb. 2017 | CA 2936725 A1 | |
| JP 3377209 B2 | 17 Feb. 2003 | WO 92/22793 A1 page 8, lines 15-35, fig. 5 EP 542962 A1 US 5510894 A | |
| US 2004/0218172 A1 | 04 Nov. 2004 | (Family: none) | |
| JP 2005-515423 A | 26 May 2005 | WO 2003/060444 A1 page 23, lines 10-15 AU 2003212794 A1 US 2004/0021860 A1 US 2004/0189989 A1 EP 1463926 A1 US 2005/0052645 A1 US 2006/0028644 A1 US 2007/0086003 A1 | |
| JP 2018-128325 A | 16 Aug. 2018 | US 2020/0003618 A1 WO 2018/147165 A1 EP 3581899 A1 | |
| JP 2016-180733 A | 13 Oct. 2016 | WO 2016/152850 A1 JP 5905140 B1 | |
| JP 2006-71611 A | 16 Mar. 2006 | US 2007/0262264 A1 WO 2006/028020 A1 EP 1788379 A1 CN 101019018 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3377209 B